(19) Europäisches Patentamt / European Patent Office / Office européen des brevets

(11) **EP 2 026 591 A2**

## (12) EUROPEAN PATENT APPLICATION

(43) Date of publication:
 **18.02.2009 Bulletin 2009/08**

(51) Int Cl.:
 ***H04N 13/00*** *(2006.01)*

(21) Application number: **08169787.2**

(22) Date of filing: **30.10.2007**

(84) Designated Contracting States:
 **DE FR GB**

(30) Priority: **27.12.2006 JP 2006352644**

(62) Document number(s) of the earlier application(s) in accordance with Art. 76 EPC:
 **07119569.7 / 1 940 181**

(71) Applicant: **Panasonic Corporation**
 **Kadoma-shi**
 **Osaka 571-8501 (JP)**

(72) Inventor: **Takeda, Katsumic/o Panasonic**
 **Corporation**
 **Chuo-ku**
 **Osaka, Osaka-shi 540-6207 (JP)**

(74) Representative: **Balsters, Robert et al**
 **Novagraaf SA**
 **25, Avenue du Pailly**
 **1220 Les Avanchets - Geneva (CH)**

Remarks:
 This application was filed on 24-11-2008 as a divisional application to the application mentioned under INID code 62.

(54) **Solid-state imaging device, camera, vehicle and surveillance device**

(57) The solid-state imaging device according to the present invention includes: an imaging unit which includes photoelectric conversion elements arranged in a matrix in a region having a first imaging region and a second imaging region; a first light introduction unit which guides and introduces light into the first imaging region; a second light introduction unit provided apart from the first light introduction unit and which guide and introduces light into the second imaging region; an output unit which: converts signal charge, which the photoelectric conversion elements arranged in the first imaging region have photoelectrically converted, into voltage or current and outputs the converted voltage or current as a first video signal; and converts signal charge, which the photoelectric conversion elements arranged in the second imaging region have photoelectrically converted, into voltage or current, and outputs the converted voltage or current as a second video signal; and a calculation unit which calculates information related to distance to an object using the first video signal and the second video signal outputted by the output unit; wherein the imaging unit, the output unit and the calculation unit are formed on the same semiconductor substrate.

**Description**

**BACKGROUND OF THE INVENTION**

**(1) Field of the Invention**

The present invention relates to a solid-state imaging device, a camera, a vehicle and a surveillance device, especially to a solid-state imaging device which captures light introduced via independent optical incidence paths and outputs a video signal.

(2) Description of the Related Art

**A camera with two imaging regions is used in order to acquire** image information according to a stereoscopic image or information related to the distance to the object (below, distance information). Cameras which output video information according to distance information detect the size and distance of an obstacle ahead using an on-board camera and can issue a warning to a driver. Further, collision with an obstacle can be avoided by automatically controlling the engine, brakes and steering wheel according to the detection of obstacles. Further, by installing a camera in the car, the size of the passenger (adult, child and so on), the position of passengers' heads and so on can be detected, and the opening speed, pressure and so on of an airbag can be controlled.

Furthermore, when a security camera, a camera in a TV phone and so on are used as a camera that outputs video information according to distance information, the amount of video information data can be reduced and sightability improved by capturing and displaying only objects within a predetermined range.

A stereo camera which includes two cameras is a well-known conventional camera for stereoscope imaging.

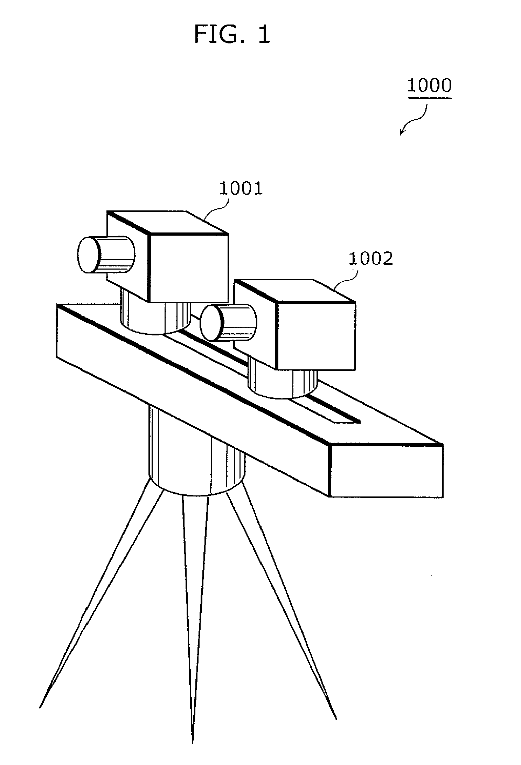

FIG. 1 is a diagram which shows the structure of a conventional solid state imaging device which captures stereoscopic video.

The solid state imaging device 1000 shown in FIG. 1 is a stereo camera that includes a camera 1001 and 1002. The camera 1001 and 1002 are installed with a predetermined distance between them. A stereoscopic image is generated by the video signal captured by the cameras 1001 and 1002.

The conventional solid-state imaging device 1000 shown in FIG. 1 requires a great amount of adjustment work hours and signal processing in order to calculate distance information, due to a problem that the conventional solid-state imaging device 1000 cannot maintain sufficient epipolarity (due to the position divergence in the video signal captured by both cameras), a problem that the capturability of both camera 1001 and 1002 does not match and a problem that temporal delays occur in the output timing of the signal outputted from the two cameras, due to using two cameras 1001 and 1002, as well as manufacturing variance and so on in the cameras 1001 and 1002.

For this problem, stereo cameras with a single chip LSI (Large Scale Integration) with two imaging regions are well known (see for example Patent Document 1).

The stereo camera according to Patent Document 1 (Japanese Patent Application Publication No. 9-74572) can reduce the effects of manufacturing variance in the two imaging regions by integrating the two imaging regions which capture objects onto a single chip.

**SUMMARY OF THE INVENTION**

However, it is expected that calculation can be performed with high accuracy and efficiency in stereographic capturing by stereo cameras and so on, or for cameras which output video information according to distance information, by improving epipolarity, equality of capturability, the synchronocity of signal output timing and so on in both cameras.

Additionally, in conventional stereo cameras, imaging regions and a signal processing unit which calculates distance information from the video signal captured in the two imaging regions is formed on different semiconductor substrates and wiring between the imaging region and the signal processing unit increases in length. Thus, there is the problem that the transmission speed of the video signal is not adequate. Furthermore, since the wiring is long, there is the problem that the signal is easily affected by noise. In particular, when an on-board camera is used, a high resistance to noise is needed.

Thus, the present invention takes as an object providing a solid-state imaging device with high resistance to noise and which can calculate distance information with high accuracy and efficiency.

In order to accomplish the object above, the solid-state imaging device according to the present invention includes: an imaging unit which includes photoelectric conversion elements arranged in a matrix in a region having a first imaging region and a second imaging region; a first light introduction unit which guides and introduces light into the first imaging region; a second light introduction unit provided apart from the first light introduction unit and which guides and introduces light into the second imaging region; an output unit which: converts signal charge, which the photoelectric conversion elements arranged in the first imaging region have photoelectrically converted, into voltage or current and outputs the converted voltage or current as a first video signal; and converts signal charge, which the photoelectric conversion elements arranged in the second imaging region have photoelectrically converted, into voltage or current, and outputs the converted voltage or current as a second video signal; and a calculation unit which calculates information related to distance to an object using the first video signal and the second video signal outputted by the output unit; wherein the imaging unit, the output unit and the calculation unit are formed on the same semiconductor substrate.

According to this configuration, the imaging unit and the calculation unit which calculates information related to the distance from the the first image signal and the second image signal captured by the imaging unit to the object, are formed on the same semiconductor substrate. Thus, the wiring between the imaging unit and the calculation unit can be shortened. Thus, noise resistance can be improved. In addition, the communication speed of the first video signal and the second video signal can be improved. Further, since the first video signal and the second video signal are captured by a single imaging unit, the variation between the first video signal and the second video signal can be reduced. Therefore, the calculation unit can calculate information related to distance to the object accurately and efficiently. Furthermore, the first video signal, the second video signal and information related to the distance to the object can be outputted to the outside.

Additionally, the calculation unit may include: a first holding unit which holds the first video signal and the second video signal outputted by the output unit; a difference calculation unit which calculates a parallax for the object using the first video signal and the second video signal held by the first holding unit; and a second holding unit which holds the parallax calculated by the difference calculation unit.

According to this configuration, the solid-state imaging device in the present invention can output the first video signal and the second video signal and the parallax between the first video signal and the second video signal to the outside.

Additionally, the difference calculation unit may include: a shift unit which repeats a process of horizontally shifting m (any integer not less than 1) rows of pixels in the first video signal held by the first holding unit by a predetermined amount of pixels for a predetermined number of times; a difference calculation unit which calculates an absolute value of the difference in signal level for each pixel included in a video signal in shifted m rows of pixels by the shift unit, and for the m rows of the second video signal held by the first holding unit, every time the process is performed by the shift unit the predetermined number of times; an addition unit which calculates a sum of n (any integer not less than 1) columns of absolute values of the difference calculated by the difference calculation unit every time the process is performed by the shift unit the predetermined number of times; a control unit which holds in the second holding unit the sum calculated by the addition unit and the number of shifts executed by the shift unit when the sum calculated by the addition unit is smaller than the sum held by the second holding unit, every time the process is performed by the shift unit the predetermined number of times; and the second holding unit outputs the held number of times the process is performed as the parallax after the predetermined number of processes have been completed by the shift unit.

According to this configuration, the parallax for each m rows x n columns of the video signal can be calculated.

Additionally, the difference calculation unit calculates the parallax for each m1 (any integer not less than 1) rows x n1 (any integer not less than 1) columns inputted from outside, the shift unit repeats the process of shifting pixels in m1 rows of the first video signal held by the first holding unit by a predetermined number of pixels, the predetermined number of times, the difference calculation unit calculates an absolute value of the difference in signal level for each pixel included in a video signal which the shift unit has shifted by m1 rows of pixels, and for the m1 rows of the second video signal held by the first holding unit, every time the process is performed by the shift unit the predetermined number of times, and the addition unit calculates a sum of n1 columns of absolute values of the difference calculated by the difference calculation unit, each time a process is performed by the shift unit the predetermined number of times.

According to this configuration, a block basis which performs the parallax calculation (m1 rows x n1 columns) can be set arbitrarily from the outside.

The first light introduction unit may include: a first collection unit which collects light of a first frequency band in the first imaging region; a first filter formed on the first imaging region, which allows light of a third frequency band that is included in the first frequency band to pass; a second collection unit which collects light of a second frequency band, which differs from the first frequency band, in the second imaging region; and a second filter formed on the second imaging region, which allows light of a fourth frequency band, which is included in the second frequency band, to pass.

According to this configuration, light of the first frequency band collected by the first collecting unit is not projected into the second imaging region due to being blocked by the second filter. Thus, interference in light of the first frequency band for the second imaging region can be reduced. Furthermore, light of the second frequency band collected by the second collecting unit is not projected into the first imaging region due to being blocked by the first filter. Thus, interference in light of the second frequency band for the first imaging region can be reduced. Furthermore, by including a first filter and a second filter, the structure can be streamlined since a douser does not need to be installed.

The solid-state imaging device may further include: a third imaging region which includes photoelectric conversion elements arranged in a matrix; a third light introduction unit which guides and introduces light to the third imaging region; the third light introduction unit includes: a third collection unit which collects light of a fifth frequency band, which includes the first frequency band and the second frequency band, in the third imaging region; a third filter formed on the third imaging region, the third filter including: a fourth filter formed on first photoelectric conversion elements, which blocks light of the second frequency band and allows light of the third frequency band to pass, the first photoelectric conversion elements being included in photoelectric conversion elements included in the third imaging region; and a fifth filter formed on second photoelectric conversion elements, which blocks light of the first frequency band and allows light of the fourth frequency band to pass, the second photoelectric conversion elements being included in photoelectric conversion elements included in the third imaging region.

According to this configuration, the third imaging region outputs a signal in which light of the first frequency band photelectrically converted, and a signal in which light of the second frequency band has been photoelectrically converted. Here, when the first filter and the second filter are installed and light of different frequency bands is inputted into the first imaging region and the second imaging region, a difference is generated in signal levels for the video signals outputted by the first imaging region and the second imaging region. Using the ratio of the signal of photo-electrically converted light of the first frequency band and the signal of photo-electrically converted light of the second frequency band outputted by the third imaging region, signal level difference due to difference in the frequency band can be reduced by correcting the video signal outputted by the first imaging region and the second imaging region.

Additionally, the solid-state imaging device may further include: an average value calculation unit which calculates a first average value which is an average value of the signals photoelectrically converted by the first photoelectric conversion elements and a second average value which is an average value of the signals photoelectrically converted by the second photoelectric conversion elements; and a correction unit which corrects the first video signal and the second video signal based on a ratio of the first average value and the second average value calculated by the average value calculation unit.

With this structure, the correction unit corrects the first video signal and the second video signal using the ratio of the first average value and the second average value calculated by the average value calculation unit. Thus, the difference in signal level between the first video signal and the second video signal can be reduced by the difference of the frequency band of light introduced into the first imaging region and the second imaging region.

Additionally, the first filter and the second filter may respectively include: a first dielectric layer; a second dielectric layer; and an insulator layer which is formed between the first dielectric layer and the second dielectric layer; and an optical film thickness of the insulator layer may differ from an optical film thickness of the first dielectric layer and the second dielectric layer.

According to this configuration, a multi-layer layer interference filter with excellent light-resistance and heat resistance is used in the first filter and the second filter. Thus, a filter which uses only inorganic materials can be constructed. By constructing the filter with only inorganic materials, a fade effect will not be generated even when used under high heat and high irradiation. Thus, the filter can be installed on the outside of a vehicle, under the hood or within the car compartment and so on, as a vehicle means.

Additionally, the solid-state imaging device further includes: a light source which projects a light onto an object with light of a frequency band that includes the first frequency band and the second frequency band.

According to this configuration, the first imaging region and the second imaging region can receive reflected light projected from the light source to the object. Thus, imaging can be performed at night and in a dark place.

Additionally, the first frequency band and the second frequency band may be included in a near-infrared region.

According to this configuration, imaging the object can be performed using light in the near-infrared region. Thus, when the solid-state imaging device in the present invention is used as a vehicle-mounted camera and so on, visual confirmation can be improved and dazzling of oncoming cars and pedestrians can be prevented.

Additionally, the output unit may include: conversion units which convert signal charge photoelectrically converted by each column of the photoelectric conversion elements into a digital signal, and output the digital signal as the first video signal or the second video signal.

According to this structure, the signal charge accumulated in each photoelectric conversion element can be simultaneously converted into a digital signal (A/D conversion) and outputted. Thus, the first video signal and the second video signal can be quickly read out.

The calculation unit may further include: a replacement unit which compares the parallax held by the second holding unit and a predetermined range, and when the parallax is not included in the predetermined range, replaces the first video signal and the second video signal corresponding to the parallax with a predetermined image, and outputs the predetermined image.

According to this configuration, when the value of the parallax is outside the predetermined range (for example, when the object is far away), an image is outputted in which only targets (objects) within the predetermined range are displayed by replacing the corresponding image with black highlight and the like.

Additionally, a camera according to the present embodiment includes the solid-state imaging device.

According to this configuration, the imaging unit and the calculation unit which calculates information related to the distance from the first image signal and the second image signal captured by the imaging unit to the object, are formed on the same semiconductor substrate. Thus noise resistance can be improved. Further, since the first video signal and the second video signal are captured by a single imaging unit, variation between the first video signal and the second video signal can be reduced. Thus, the calculation unit can calculate information related to the distance to the object with high accuracy and efficiency. Thus, the present invention can realize a camera with high resistance to noise and which calculates information related to distance to the object with high accuracy and efficiency.

Additionally, the surveillance device according to the present invention includes the camera.

According to this configuration, the imaging unit and the calculation unit which calculates information related to the distance from the first image signal and the second image signal captured by the imaging unit to the object, are formed on the same semiconductor substrate. Thus noise resistance can be improved. Further, since the first video signal and the second video signal are captured by a single imaging unit, variation between the first video signal and the second video signal can be reduced. Thus, the calculation unit can calculate information related to the distance to the object with high accuracy and efficiency. Thus, the present invention can realize a surveillance device with high resistance to noise and which calculates information related to distance to the object with high accuracy and efficiency.

Thus, the present invention can provide a solid-state imaging device with high resistance to noise which can calculate distance information with high accuracy and efficiency.

## FURTHER INFORMATION ABOUT TECHNICAL BACKGROUND TO THIS APPLICATION

The disclosure of Japanese Patent Application No. 2006-352644 filed on December 27th, 2006 including specification, drawings and claims is incorporated herein by reference in its entirety.

## BRIEF DESCRIPTION OF THE DRAWINGS

These and other objects, advantages and features of the invention will become apparent from the following description thereof taken in conjunction with the accompanying drawings that illustrate a specific embodiment of the invention. In the Drawings:

FIG. 1 is a diagram which shows the structure of a conventional solid-state imaging device;

FIG. 2 is a diagram which shows the structure of the solid-state imaging device according to the first embodiment of the present invention;

FIG. 3 is a diagram which shows a structure of the imaging unit and signal processing unit of the solid-state imaging device according to the first embodiment of the present invention;

FIG. 4 is a diagram which typically shows a cross-section structure of the imaging unit of the solid-state imaging device according to the first embodiment of the present invention;

FIG. 5A is a diagram which shows a typical cross-section structure of the filter of the solid-state imaging device according to the first embodiment;

FIG. 5B is a diagram which shows a modification of a typical cross-section structure of the filter in the solid-state imaging device according to the first embodiment;

FIG. 6 is a diagram which shows a light transparency rate for a wavelength of light in the filter of the solid-state imaging device according to the first embodiment of the present invention;

FIG. 7 is a diagram which shows a light transparency rate for a wavelength of light in the filter of the solid-state imaging device according to the first embodiment of the present invention;

FIG. 8A is a diagram which shows an example of a video signal outputted by the imaging unit of the solid-state imaging device according to the first embodiment of the present invention;

FIG. 8B is a diagram which shows an example of a video signal outputted by the imaging unit of the solid-state imaging device according to the first embodiment of the present invention;

FIG. 9 is a diagram for explaining the processes of a signal processing unit in the solid-state imaging device according to the first embodiment of the present invention;

FIG. 10 is a diagram which shows an example of the layout of photoelectric conversion elements used for photoelectric conversion in the left-hand image and right-hand image of the solid-state imaging device according to the first embodiment of the present invention;

FIG. 11 is a flowchart which shows a calculation process of distance information according to the signal processing unit in the solid-state imaging device according to the first embodiment of the present invention;

FIG. 12A is a diagram for explaining the calculation process of distance information by the distance information calculation unit in the solid-state imaging device according to the first embodiment of the present invention;

FIG. 12B is a diagram for explaining the calculation process for distance information by the distance information calculation unit in the solid-state imaging device according to the first embodiment of the present invention;

FIG. 12C is a diagram for explaining the calculation process by the distance information calculation unit in the solid-state imaging device according to the first embodiment of the present invention;

FIG. 12D is a diagram for explaining the calculation process by the distance information calculation unit in the solid-state imaging device according to the first embodiment of the present invention;

FIG. 12E is a diagram for explaining the calculation process of distance information by the distance information calculation unit in the solid-state imaging device according to the first embodiment of the present invention;

FIG. 13A is a diagram for explaining the calculation process of distance information by the distance information calculation unit in the solid-state imaging device according to the first embodiment of the present invention;

FIG. 13B is a diagram for explaining the calculation process of distance information by the distance information calculation unit in the solid-state imaging device according to the first embodiment of the present invention;

FIG. 13C is a diagram for explaining the calculation process of distance information by the distance information calculation unit in the solid-state imaging device according to the first embodiment of the present invention;

FIG. 13D is a diagram for explaining the calculation process of distance information by the distance information calculation unit in the solid-state imaging device according to the first embodiment of the present invention;

FIG. 13E is a diagram for explaining the calculation process of the distance information by the distance information calculation unit in the solid-state imaging device according to the first embodiment of the present invention;

FIG. 14A is a diagram which shows an example of data held by the distance information holding unit in the calculation process of the distance information by the distance information calculation unit of the solid-state imaging device according to the first embodiment of the present invention;

FIG. 14B is a diagram which shows an example of data held by the distance information holding unit in the calculation process of the distance information by the distance information calculation unit of the solid-state imaging device according to the first embodiment of the present invention;

FIG. 14C is a diagram which shows an example of data held by the distance information holding unit in the calculation process of the distance information by the distance information calculation unit of the solid-state imaging device according to the first embodiment of the present invention;

FIG. 14D is a diagram which shows an example of data held by the distance information holding unit in the calculation process of the distance information by the distance information calculation unit of the solid-state imaging device according to the first embodiment of the present invention;

FIG. 14E is a diagram which shows an example of data held by the distance information holding unit in the calculation process of the distance information by the distance information calculation unit of the solid-state imaging device according to the first embodiment of the present invention;

FIG. 15 is a diagram which shows a modification of a structure of the imaging unit and the signal processing unit of the solid-state imaging device according to the first embodiment of the present invention;

FIG. 16 is a diagram which shows a structure of the solid-state imaging device according to the second embodiment of the present invention;

FIG. 17 is a diagram which shows a structure of the imaging unit of the solid-state imaging device according to the second embodiment of the present invention;

FIG. 18 is a diagram which shows a typical cross-section structure of an imaging unit in the solid-state imaging device according to the second embodiment of the present invention;

FIG. 19 is a diagram which shows a structure of the filter 242 in the solid-state imaging device according to the second embodiment of the present invention.

## DESCRIPTION OF THE PREFERRED EMBODIMENT(S)

Below, an embodiment of the solid-state imaging device according to the present invention is described in detail with reference to the diagrams.

(First Embodiment)

An imaging unit and a signal processing unit which calculates distance information to an object from the two image signals captured by the imaging unit are formed on the same semiconductor substrate in the solid-state imaging device according to the first embodiment of the present invention. Thus, a solid-state imaging device can be realized with a high resistance to noise which can calculate distance information with high accuracy and efficiency.

First, the structure of the solid-state imaging device according to the present embodiment is described.

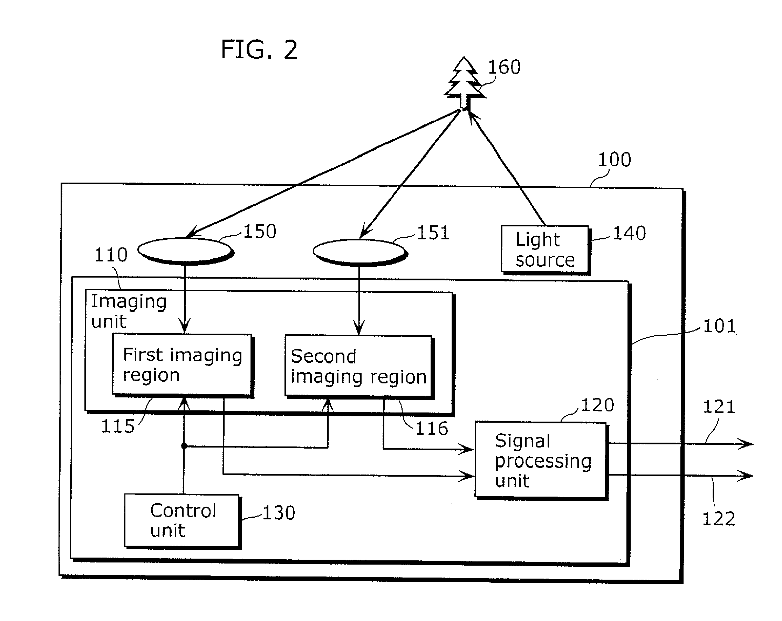

FIG. 2 is a diagram which shows the structure of the solid-state imaging device according to the first embodiment of the present invention.

The solid-state imaging device 100 according to FIG. 2 outputs video information and distance information related to a captured object 160. The solid-state imaging device 100 is, for example, a camera which includes a night vision function that uses light in a near-infrared area (below, "near-infrared light"), the night vision function being loaded on the vehicle. The solid-state imaging device 100 includes a semiconductor device 101, a light source 140, and a lens 150 and 151. The semiconductor device 101 is a single chip semiconductor integrated circuit. The semiconductor device 101 includes an imaging unit 110, a signal processing unit 120 and a control unit 130. In other words, the imaging unit 110, the signal processing unit 120 and the control unit 130 are formed on the same semiconductor substrate.

The light source 140 projects near-infrared light (wavelength 700nm to 1100 nm) onto the object 160. The light source 140 is comprised for example of a light-emitting diode (LED) or a semi-conductor laser.

The lens 150 and 151 collect light reflected from the object 160 in the imaging unit 110. The lens 150 collects reflected light from the object 160 in the first imaging region 115. The lens 151 collects reflected light from the object 160 in the second imaging region 116. The lens 151 is provided apart from the lens 150 horizontally.

The imaging unit 110 is a CMOS image sensor which outputs a video signal according to the incident light. The imaging unit 110 converts reflected light from the object 160 into an electric signal and outputs the converted electric signal as two imaging signals (left-hand image and right-hand image). More specifically, the imaging unit 110 converts light collected in the lens 150 into an electric signal and outputs the converted electric signal as the left-hand image. The imaging unit 110 converts the light collected in the lens 151 into an electric signal and outputs the converted electric signal as the right-hand image.

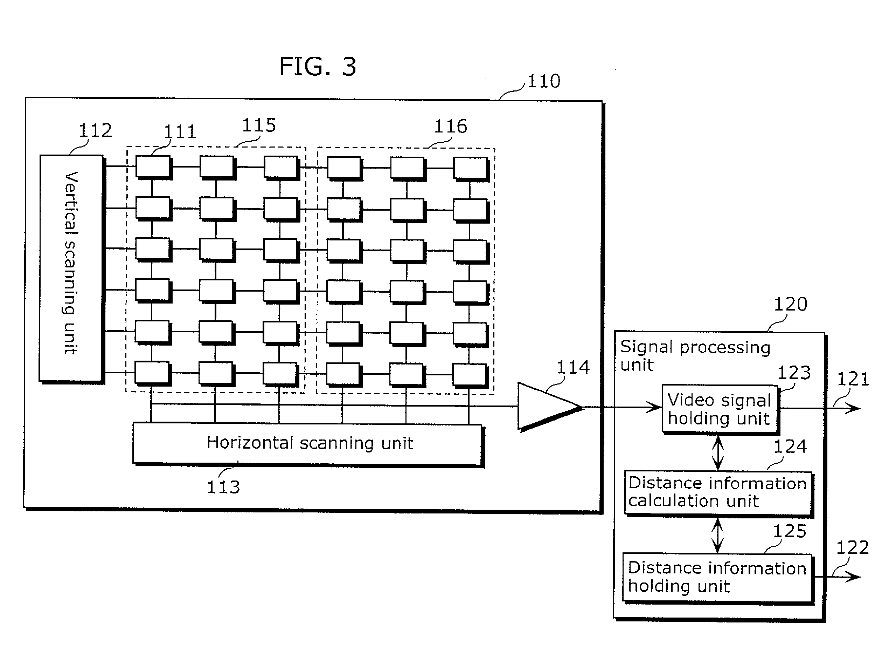

FIG. 3 is a diagram which shows the structure of the imaging unit 110 and the signal processing unit 120. The imaging unit 110 includes plural photoelectric conversion elements 111, a vertical scanning unit 112, a horizontal scanning unit 113 and an A/D conversion unit 114.

Plural photoelectric conversion elements 111 are arranged in a matrix shape on the semiconductor substrate. Plural photoelectric elements 111 accumulate signal charge according to the amount of light received. The plural photoelectric conversion elements 111 are layed out in a region which includes the first imaging region 115 and the second imaging region 116. For example, there are the same amount of photoelectric conversion elements 111 included in the first imaging region 115 and the second imaging region 116. The photoelectric conversion elements 111 included in the first imaging region 115 photoelectrically convert light collected by the lens 150. The photoelectric conversion elements 111 included in the second imaging region 116 photoelectrically convert light collected in the lens 151. Note that the rows of the photoelectric conversion elements 111 layed out in a matrix correspond to the horizontal direction and the columns correspond to the vertical direction. Furthermore, the photoelectric conversion elements 111 are arranged in 6 rows by 6 columns in FIG. 3, although the number of photoelectric conversion elements 111 is not limited to this number.

The vertical scanning unit 112 sequentially selects the photoelectric conversion elements 111 which correspond to each row of the photoelectric conversion elements 111.

The horizontal scanning unit 113 sequentially selects the photoelectric conversion element 111 which corresponds to each column of the photoelectric conversion elements 111.

A row is selected by the vertical scanning unit 112 for the A/D conversion unit 114, and the signal charge accumulated in the photoelectric conversion element 111 for which a column has been selected by the horizontal scanning unit 113 is converted into voltage or current and the converted voltage or current is outputted as a video signal. In other words, the A/D conversion unit 114 converts the analog signal based on the signal charge accumulated in the photoelectric conversion element 111 into a digital signal and outputs the digital signal as a video signal. Furthermore, the video signal outputted by the A/D conversion unit 114 includes a video signal corresponding to the left-hand image, in which the signal charge accumulated in the photoelectric conversion elements 111 included in the first imaging region 115 is converted into voltage or current and a video signal corresponding to the right-hand image in which the signal charge accumulated in the photoelectric conversion elements 111 included in the second imaging region 116 is converted into voltage or current.

The control unit 130 controls the imaging unit 110 and the signal processing unit 120. More specifically, the control unit 130 generates a vertical synchronization signal which starts selection of a row by the vertical scanning unit 112, a horizontal synchronization signal which starts selection of a column by the horizontal scanning unit 113 and a charge accumulation control signal which controls the driving timing of the vertical scanning unit 112. The charge accumulation control signal is a signal for controlling the charge accumulation time (light exposure time) of the photoelectric conversion elements 111.

The signal processing unit 120 calculates distance information to the object from the left hand image and the right hand image outputted by the imaging unit 110 and outputs the video signal 121 and the distance information 122 to the outside. The signal processing unit 120 includes a video signal holding unit 123, a distance information calculation unit 124 and a distance information holding unit 125.

The video signal holding unit 123 holds the left hand image and the right hand image which are made up of the video signal outputted by the imaging unit 110. Furthermore, the image signal holding unit 123 outputs the held video signal 121 to the outside.

The distance information calculation unit 124 calculates the parallax which is the distance information to the object from the left-hand image and right-hand image held by the video signal holding unit 123.

The distance information holding unit 125 holds the distance information (parallax) calculated by the distance information calculation unit 124. Furthermore, the distance information holding unit 125 outputs the held distance information 122 to the outside.

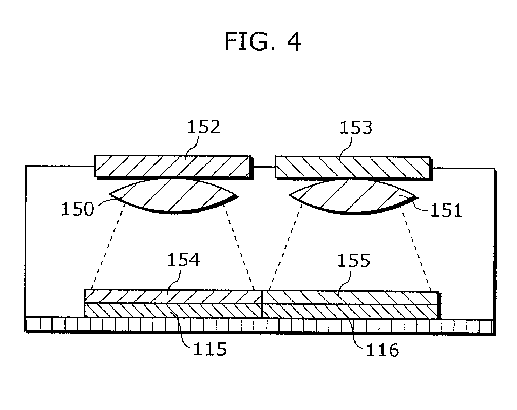

FIG. 4 is a diagram which shows a typical cross-section structure of the first imaging region 115 and the second imaging region 116 in the imaging unit 110. As shown in FIG. 4, the solid-state imaging device 100 further includes filters 152, 153, 154 and 155. The filters 152, 153, 154 and 155 are for example multi-film interference filters.

Reflected light from the object 160 is introduced into the first imaging region 115 via an optical incidence path made up of the filter 152, the lens 150 and the filter 154. Reflected light from the object 160 is introduced into the second imaging region 116 via an optical incidence path made up of the filter 153, the lens 151 and the filter 155. The filter 152 is formed on the upper part of the lens 150 and allows only light of the first frequency band to pass through. In other words, light of the first frequency band is collected in the first imaging region 115 by the filter 152 and the lens 150. The filter 153 is formed on the upper part of the lens 151 and allows only light of the second frequency band to pass through. In other words, light of the second frequency band is collected in the imaging region 116 by the filter 153 and the lens 151. The filter 154 is formed on the first imaging region 115 and allows only light of the first frequency band to pass through. The filter 155 is formed on the second imaging region 116 and allows only light of the second frequency band to pass through. Here, the first frequency band and the second frequency band are mutually differing frequency bands which do not overlap within a near-infrared area (wavelength 700nm to 1100nm). For example, the first frequency band is a frequency band from wavelength 750nm to 850nm and the second frequency band is a frequency band from wavelength 950nm to 1050nm.

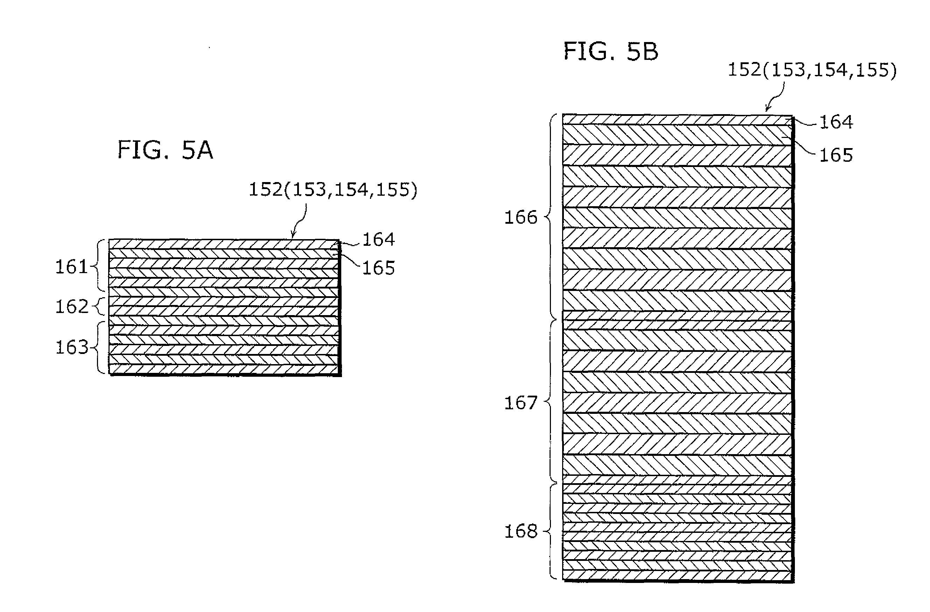

FIG. 5A and FIG. 5B are diagrams which typically show a cross-section structure of the filter 152. Note that the cross-section structure of the filters 153 to 155 are the same as those of FIG. 5A or FIG. 5B.

The filter 152 shown in FIG. 5A includes a top reflection layer 161, a spacer layer 162 and a bottom reflection layer 163. The spacer layer 162 is laminated on the bottom reflection layer 163, and the top reflection layer 161 is laminated on the spacer layer 162.

The top reflection layer 161 and the bottom reflection layer 163 have structures in which a layer 164, which is made up of three layers with high refractive index material, and a layer 165, which is made up of three layers with a low refractive index, are layered alternately. The layer 164 which is made up of high refractive index material is for example made up of oxidized titanium $TiO_2$ (refractive index 2.5). The layer 165 which is made up of low refractive index material is for example made up of oxidized silicon $SiO_2$ (refractive index 1.45). The spacer layer 162 is made up of high refractive index material, for example, oxidized titanium $TiO_2$ (refractive index 2.5). Furthermore, the top reflection layer 161 in the multi-layer film structure and the bottom reflection layer 163, which have an optical layer thickness of $\lambda/4$ (A: a set central wavelength), are symmetrically placed around the spacer layer 162. With this kind of layered construction, a transparent band region can be selectively formed in the reflection region and further, the penetration peak wavelength can be changed by changing the film thickness of the spacer layer 162.

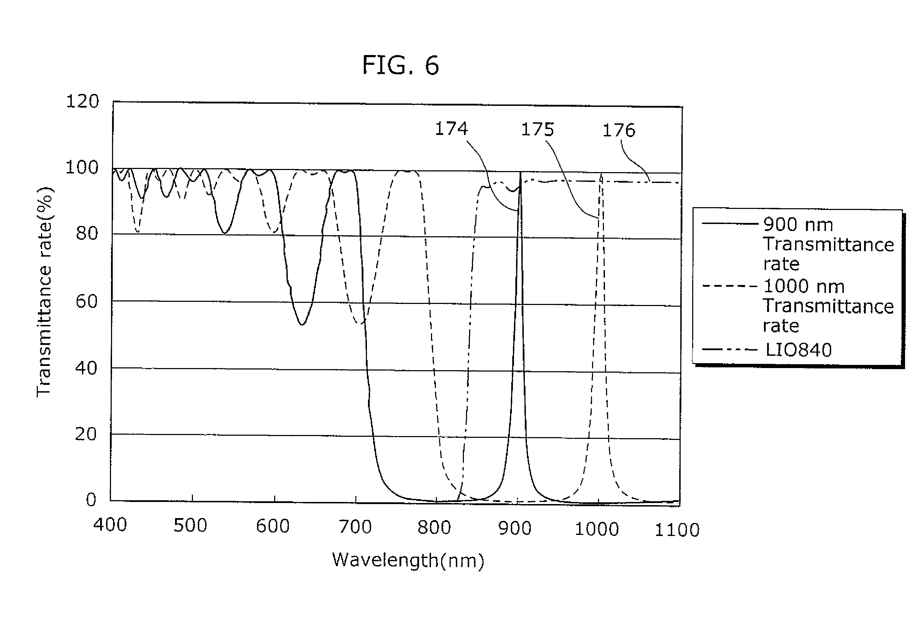

FIG. 6 is a diagram which shows a calculation result of the light transmittance rate for the wavelength of light in the filter 152 shown in FIG. 5A. Note that the characteristic matrix method is well-known for calculating transmittance rates of conductor multi-layer film interference filters. As shown in FIG. 6 a multi-layered film interference filter with a characteristic set central wavelength of 900nm shown by a solid line 174 can be structured, for example, with the $TiO_2$ layer 164 at 90nm and the $SiO_2$ layer 165 at 155nm. Furthermore, a multi-layer film interference filter with a set central wavelength of 1000nm as shown by a dotted line 175 can be structured with the $TiO_2$ layer 164 at 99nm and the $SiO_2$ layer 165 at 171 nm. Here, the spacer layer 162 has an optical film thickness of $\lambda/2$. Also, as shown in FIG. 6, the filter 152 shown in FIG. 5A has a property which allows short wavelength band light (of a wavelength no more than 800nm) to pass through, however by combining short wavelength cut optical filters (for example, an Asahi [Ltd.] Spectra LIO840 and so on: the chain double-dashed line 176 in FIG. 6), only light of wavelength 900nm or 1000nm can be allowed to pass.

Note that the structure of the filter 152 may be structured from a reflection layer 166, a reflection layer 167 and a multi-layer film interference filter 169 in which a $TiO_2$ layer and an $SiO_2$ layer of predetermined film thickness and amount of layers are laminated, as shown in FIG. 5B.

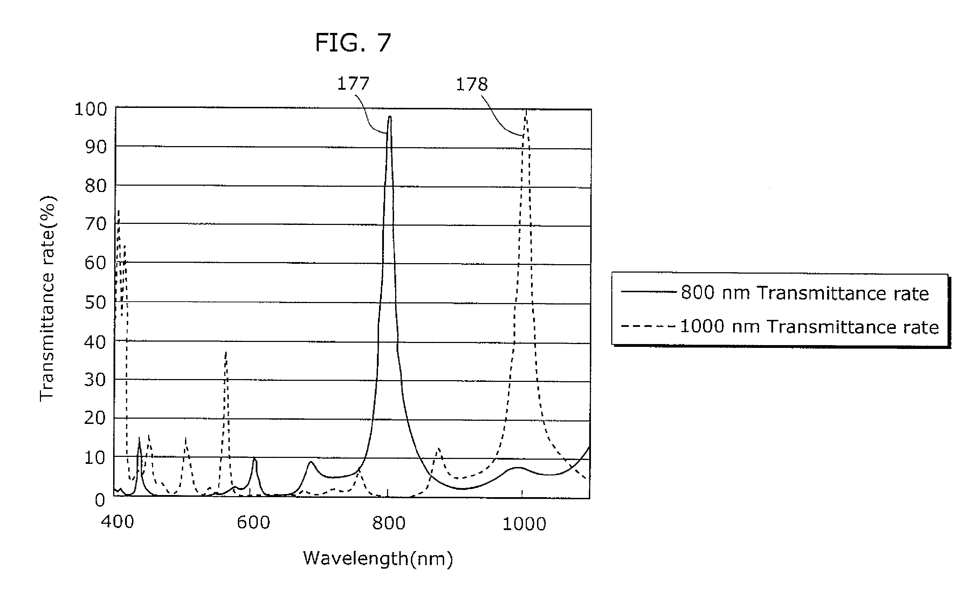

FIG. 7 is a diagram which shows a calculation result of the light transmittance rate for the wavelength of light in the filter 152 shown in FIG. 5B. Note that the multi-layered film interference filter 168 shown in FIG. 5B, has for example the structure shown in FIG. 5A. A multi-layer film interference filter with a set central wavelength of 800nm or 1000nm is structured by setting the film thickness and the number of layers for the top reflection layer 161, the spacer layer 162 and the bottom reflection layer 163 in the multi-layer film interference filter 168. Further, the transmitability of the short-wavelength side is suppressed by laminating the reflection layers 166 and 167 into the multi-layer film interference filter 168. Thus, a multi-layered film interference filter with a set central wavelength of 800nm shown by the solid line 177 and a multi-layered film interference filter with a set central wavelength of 1000nm shown by the dashed line 178 in FIG. 7 can be composed. For example, the multi-layer film interference filter with a set central wavelength of 800nm can be structured when a $TiO2$ layer 164 of 79nm and a $SiO_2$ layer 165 of 137nm are included in the multi-layer film interference filter 168; a topmost and bottommost $TiO_2$ layers of 20nm, the other $TiO2$ layers 164 of 40nm, and a $SiO_2$ layer 165 of

68nm are included in the reflection layer 167; and an uppermost layer and a bottommost $TiO_2$ layer 164 of 27nm, the other $TiO_2$ layers 164 of 54nm and an $SiO_2$ layer 165 is 94nm are included in the reflection layer 166. Furthermore, a multi-layer film interference filter with a set central wavelength 1000nm can be structured when a $TiO_2$ layer 164 of 99nm and a $SiO_2$ layer 165 of 171nm are included in the multi-layer film interference filter 168; an uppermost and a bottommost $TiO_2$ layer included in the reflection layer 167 of 25nm, the rest of the $TiO_2$ layers 164 of 50nm, a $SiO_2$ layer 165 of 86nm are included in the reflection layer 167, the uppermost layer and the bottommost $TiO_2$ layer 164 are 35nm, the other $TiO_2$ layers 164 are 70nm and the $SiO_2$ layer 165 is 120nm included in the reflection layer 166.

Note that the layer 164, which is composed of high refractive index materials, is composed of oxidized titanium $TiO_2$, but may be composed of nitrous silicon (SiN), oxidized tantalum ($Ta_2O_5$) or oxidized zirconium ($ZrO_2$) and so on. Furthermore, the layer 165 composed of low refractive index materials is composed of oxidized silicon $SiO_2$, however when the refractive index is low compared to a conductor used as a high refractive index material, material other than the oxidized silicon $SiO_2$ may be used.

Furthermore, the set central wavelength, the film thickness of the spacer layer and the number of pairs written above make up one example, and these values may be set according to preferred spectral characteristics.

In this way, by using a conductor multi-layer film interference filter, the filter can be manufactured with a normal semiconductor process and after forming a receiving unit and a wiring unit of the solid-state imaging device, there is no need to form the filter with a process that differs from the normal semiconductor process i.e. a single chip process as in a conventional pigment filter. Thus, costs can be reduced to the extent that the process is stabilized and productivity is improved.

Further, a filter that uses inorganic materials can be structured by utilizing a conductor multi-layer interference filter. Therefore, since fading effects are not generated even when the filter is used under high temperatures and high irradiation, the solid-state imaging device can be installed at locations such as on the outside of a vehicle, under a hood, or inside a car compartment.

Next, processes of the solid-state imaging device 100 according to the present embodiment are described.

Near-infrared light projected from the light source 140 is reflected by the object 160. In the light reflected by the object 160, the filter 152 allows only light of the first frequency band to pass, the light is collected in the lens 150 and projected into the first imaging region 115 through the filter 154. Furthermore, in the light reflected by the object 160, the filter 153 allows only light of the second frequency band to pass, the light is collected in the lens 151 and projected into the second imaging region 116 through the filter 155. Here, by including a filter 154 and 155 in the first imaging regions 115 and the second imaging region 116, the light collected in the lens 150 through the filter 152 is introduced into only the imaging region 115 without being introduced into the second imaging region 116 since the light is blocked by the filter 155. Furthermore, the light collected by the lens 151 through the filter 153 is introduced into only the second imaging region 116 without being introduced into the first imaging region 115, due to being blocked by the filter 154. In other words, the solid-state imaging device 100 according to the first embodiment of the present invention can prevent interference in light introduced into the first imaging regions 115 and the second imaging region 116. Furthermore, by including the filters 152 through 154, the structure can be streamlined since a douser and the like does not have to be installed. Therefore, by using a single CMOS image sensor, imaging can be easily performed without mutual interference by light introduced from two lenses.

The photoelectric conversion elements 111 included in the first imaging region 115 accumulate electric charge according to the amount of incident light of the first frequency band collected in the lens 150. The photoelectric conversion elements 111 included in the second imaging region 116 accumulates signal charge according to the amount of incident light of the second frequency band collected in the lens 151. The control unit 130 generates a vertical synchronization signal which starts selection of a row by the vertical scanning unit 112, a horizontal synchronization signal which starts selection of a column by the horizontal scanning unit 113 and a charge accumulation control signal which controls the driving timing of the vertical scanning unit 112. The vertical scanning unit 112 sequentially selects a row of the photoelectric conversion elements 111 arranged in a matrix shape, using the vertical synchronization signal from the control unit 130. The horizontal scanning unit 113 sequentially selects a column of the photoelectric conversion elements 111 arranged in a matrix shape according to the horizontal synchronization signal from the control unit 130. The signal charge accumulated in the photoelectric conversion elements 111, a row of which is selected by the vertical scanning unit 112 and a column of which is selected by the horizontal scanning unit 113, is converted into a sequential digital signal and outputted as a digitalized video signal by the A/D conversion unit 114.

In this way, the solid-state imaging device 100 according to the first embodiment of the present invention outputs two video signals (the left-hand image and the right-hand image) captured by a single CMOS image sensor. Thus, compared to the video signal captured by different CMOS image sensors, variation can be reduced and epipolarity can be improved. Here, a high epipolarity means that vertical divergences (difference) between the two video signals are small.

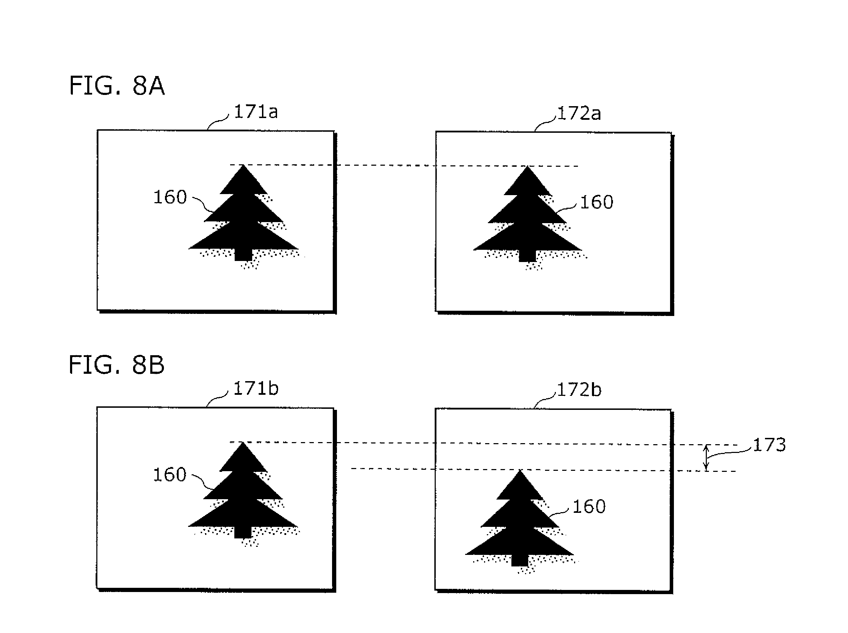

FIG. 8A and FIG. 8B are figures which show an example of a video signal image outputted by the imaging unit 110. In FIG. 8A and FIG. 8B, the images 171a and 171b are the left-hand image captured by the first imaging region 115 and the images 172a and 172b are the right-hand image captured by the imaging region 116. For example, when the object 160 is captured, the imaging unit 110 outputs the images 171a and 172a shown in FIG. 8A.

The video signal holding unit 123 holds a video signal of the left-hand image and a video signal of the right-hand image outputted by the imaging unit 110. The distance information calculation unit 124 calculates distance information to the object 160 from the video signal of the left-hand image and the video signal of the right-hand image held by the video signal holding unit 123.

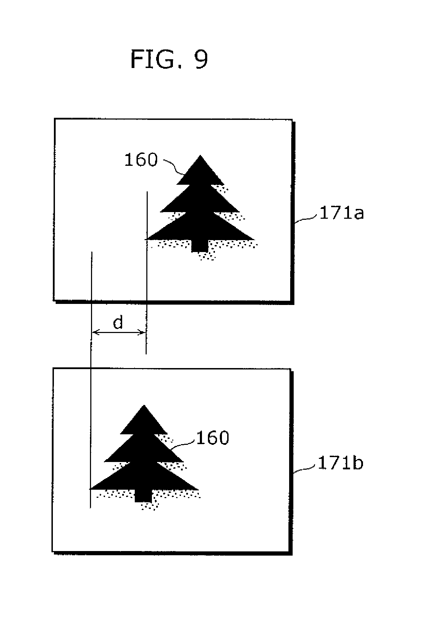

FIG. 9 is a diagram for explaining the process of the distance information calculation unit 124 for the image shown in FIG. 8A. The distance information calculation unit 124 calculates a parallax d for the object 160 from the left-hand image 171a and the right-hand image 172a. The parallax d is a horizontal divergence (difference) of the object 160 between the left-hand image 171a and the right-hand image 172a. For example, the distance information calculation unit 124 compares the data in each row of the left-hand image 171a and the right-hand image 172a and determines whether the data match. Next, the distance information calculation unit 124 shifts each row of data in the right-hand image 172a to the right side and assesses whether or not the shifted data matches the left-hand image 171a. The distance information calculation unit 124 repeats the function for shifting each row of data to the right in the right-hand image 172a as well as a process for assessing whether each row of data matches the left-hand image 171a. The signal processing unit 120 calculates the shift amount, when each row of the left-hand image 171a is most similar to the right-hand image 172a, as the parallax d. More specifically, the distance information calculation unit 124 repeats a process of shifting pixels in m (any integer not less than 1) rows of the left-hand image held by the video signal holding unit 123 by a predetermined amount of pixels for a predetermined number of times. The distance information calculation unit 124 calculates an absolute value difference of the signal level for each pixel included in the shifted m rows of the left-hand image, and the shifted m rows of the right-hand image held by the video signal holding unit 123, for each of the predetermined number of processes. The distance information calculation unit 124 calculates a sum for each number of columns n (n: an integer not less than 1) of the absolute value of the calculated difference for each process performed the predetermined number of times. When the calculated sum is smaller than the sum held by the distance information holding unit 125, the distance information calculation unit 124 holds the calculated sum and the number of times the shift process is performed in the distance information holding unit 125 for each of the predetermined number of processes. After the distance information calculation unit 124 finishes the shift process the predetermined number of times, the distance information holding unit 125 outputs the held number of times the process is performed as the parallax after the predetermined number of processes have been completed. For example, when the shift amount (normally 1 pixel) is n pixels, the number of times the shift process is performed is N times, and the pixel pitch is Px, a parallax Z is calculated by $Z = n \times N \times Px$. Note that the shift amount according to the shift process performed by the distance information calculation unit 124 may be set by input from outside. Thus, an arbitrary shift amount can be set and the accuracy of the parallax and the process time can be set arbitrarily.

Below, detailed processes of the signal processing unit 120 are explained.

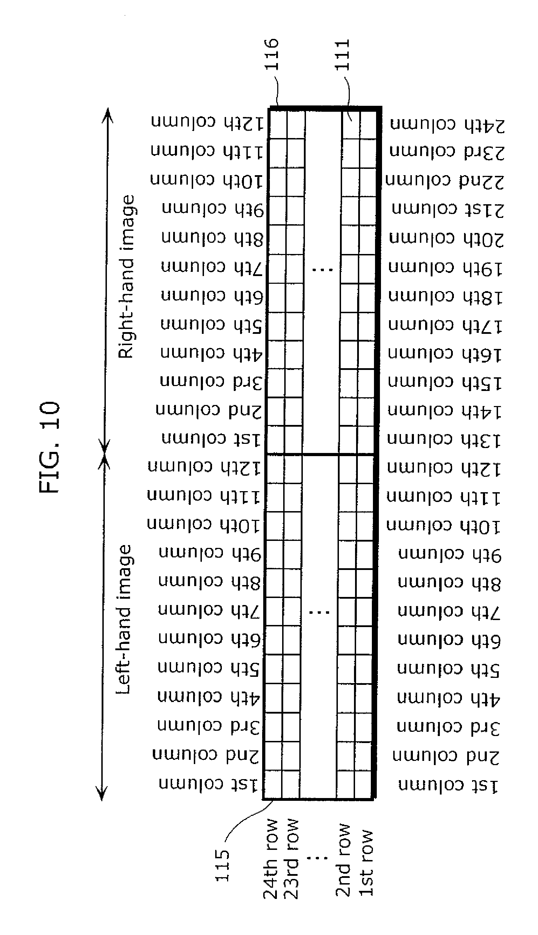

FIG. 10 is a diagram which shows an example of the configuration of the photoelectric conversion elements 111 used in photoelectric conversion of the left-hand image and the right-hand image by the imaging unit 110. As shown in FIG. 10, the processes of the signal processing unit 120 are explained compared to 24 rows x 24 columns of photoelectric conversion elements 111 for when the 1st column to the 12th column of the photoelectric conversion elements 111 are the first imaging region 115 which captures the left-hand image, and the 13th column to the 24th column of the photoelectric conversion elements 111 are the second imaging region 116 which captures the right-hand image. As shown in FIG. 10, the 1st through 12th column of the photoelectric conversion elements 111 correspond to the 1st through 12th column of the left-hand image, and the 13th through 24th column of the photoelectric conversion elements 111 correspond to the 1st through 12th column of the right-hand image.

First, the A/D conversion unit 114 A/D converts the accumulated charge in the first and second row of photoelectric conversion elements 111 and holds the converted video signal in the video signal holding unit 123. In other words, the video signal holding unit 123 holds the video signal according to the first row and the second row of the left-hand image and the right-hand image.

Next, the distance information calculation unit 124 calculates the parallax from the video signals in the first row and the second row of the right-hand image and the left-hand image held by the video signal holding unit 123.

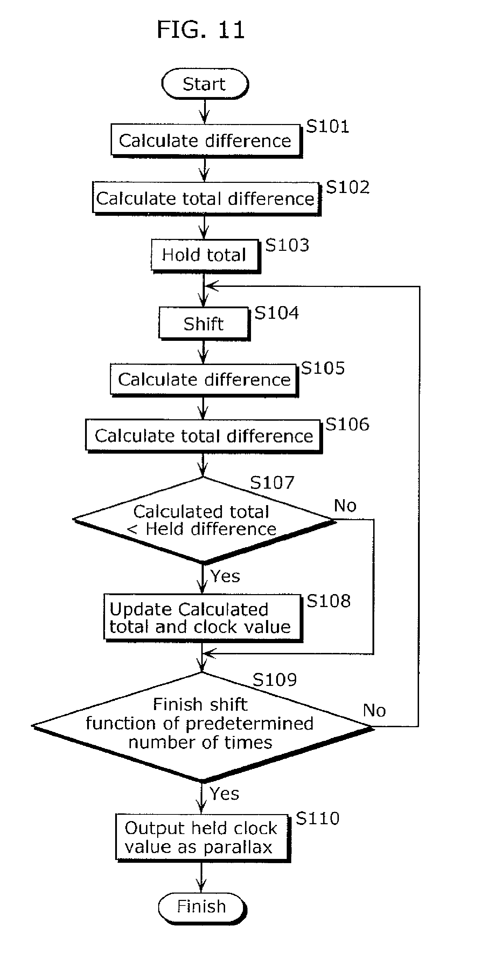

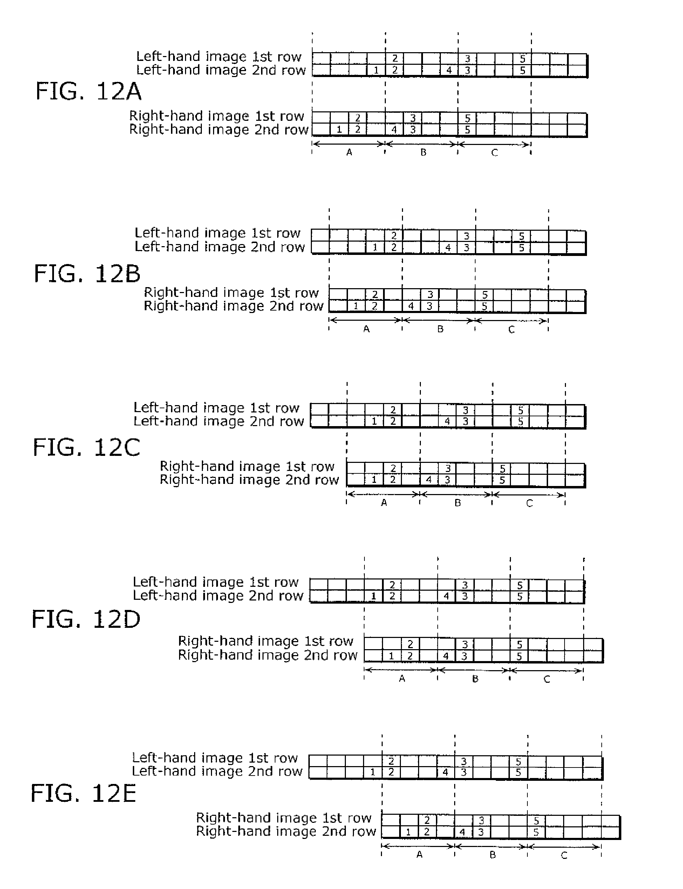

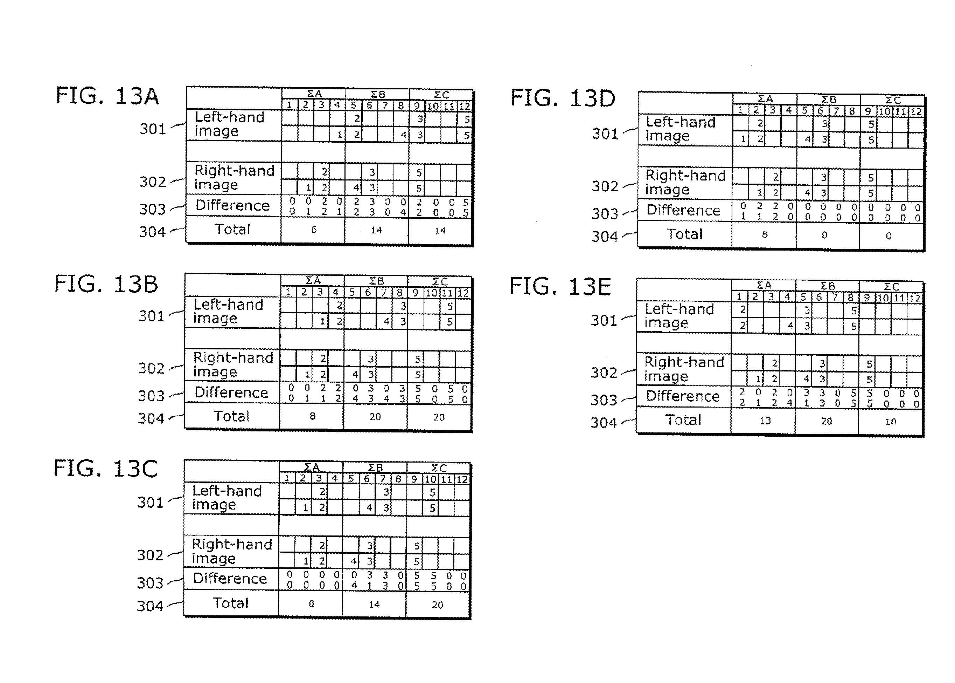

FIG. 11 is a flowchart which shows a process flow in which the signal processing unit 120 calculates the parallax. FIG. 12A, FIG. 12B, FIG. 12C, FIG. 12D, FIG. 12E, FIG. 13A, FIG. 13B, FIG. 13C, FIG. 13D and FIG. 13E are diagrams for explaining the process for calculating the parallax by the distance information calculation unit 124. The video signal of the right-hand image and the left-hand image as shown in FIG. 12A are read-out and a case in which they are held in the video signal holding unit 123 is explained. Note that the value in the box of the figure indicates the signal level of the video signal, for example a value according to the luminance of the incident light.

The distance information calculation unit 124 splits 12 columns of video signal from two rows of video signal into three regions A, B and C for each 4 columns and calculates the parallax for each region. In other words, the distance information calculation unit 124 calculates the parallax for each pixel in 2 rows by 4 columns. First, the distance information calculation unit 124 calculates the absolute value 303 of the difference between the signal level 301 and the signal level 302 for each pixel in the left-hand image of each pixel in the right-hand image (S101) as shown in FIG. 13A. Next, the distance information calculation unit 124 calculates a total value 304 of the absolute value 303 of the difference for each region A, B and C (S102). For example, as shown in FIG. 13A, "6", "14" and "14" are calculated as the total values 304 for each region A, B and C. The distance information calculation unit 124 holds the calculated total value 304 in the distance information holding unit 125 (S103).

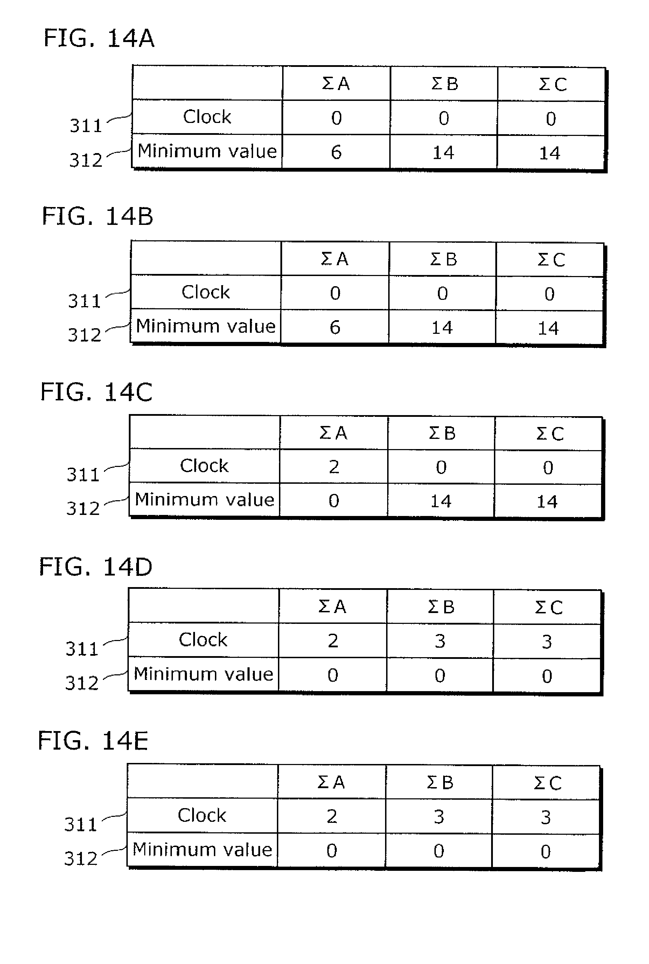

FIG. 14A, FIG. 14B, FIG. 14C, FIG. 14D and FIG. 14E are diagrams which show an example of data held by the distance information holding unit 125 in the process for calculating the parallax by the signal processing unit 120. When the total value 304 shown in the FIG. 13A is calculated by the distance information calculation unit 124, "0" is held in the distance information holding unit 125 as a clock value 311 shown in FIG. 14A, and "6", "14" and "14" are held as a minimum value 312 for the total value 304 in each region A, B and C. Here, the clock value 311 corresponds to the number of times the left-hand image has been shifted.

Next, the distance information calculation unit 124 shifts the left-hand image 1 pixel to the left (or shifts the right-hand image to the right) as shown in FIG. 12B (S104). The distance information calculation unit 124 calculates an absolute value of the difference between the right-hand image and the shifted left-hand image (S105). The distance information calculation unit 124 calculates the total value 304 of the absolute value 303 of the difference for each region A, B and C (S106). For example, as shown in FIG. 13B, "8", "20" and "20" are calculated as the total value 304 of each region A, B and C.

Next, the distance information calculation unit 124 compares the minimum value 312 (FIG. 14A) of the total value for each region A, B and C held in the distance information holding unit 125 with the calculated total value 304. The distance information calculation unit 124 holds the clock value 311 and the minimum value 312 of the total value for the difference held by the distance information holding unit 125 without modifying the total values "8", "20" and "20" calculated for each of the regions since the total values "8", "20" and "20" calculated for each of the regions are larger than the total values "6", "14" and "14" of each region held by the distance information holding unit 125 (No in S107). Thus, the clock value 311 shown in FIG. 14A and the minimum value 312 of the total value for the difference are held by the distance information holding unit 125 (FIG. 14B).

Next, the distance information calculation unit 124 determines whether or not the shift process has been performed the predetermined number of times. Note that here, the case is explained for when the predetermined number of times is "4". The distance information calculation unit 124 shifts the left-hand image to the left by one pixel (S104) as shown in FIG. 12C since the number of shift times is "1" and the predetermined number of shifts has not been performed (No in S109). The distance information calculation unit 124 calculates an absolute value of the difference between the right-hand image and the shifted left-hand image (S105). The distance information calculation unit 124 calculates the total value 304 of the absolute value 303 of the difference for each region A, B and C (S106). For example, "0", "14" and "20" are calculated as the total value 304 for each region A, B and C as shown in FIG. 13C.

Next, the distance information calculation unit 124 compares the minimum value 312 (FIG. 14B) of the total value for each region A, B and C held by the distance information holding unit 125, and the calculated total value 304. Since the total value "0" calculated for the region A is smaller than the total value "6" in the region A held by the distance information holding unit 125 (Yes in S107), the distance information calculation unit 124 updates the clock value 311 of the region A held by the distance information holding unit 125 to the present clock value (number of shifts) "2", and updates the minimum value 312 of the total value of the difference to the total calculated value "0". In addition, since the calculated total value "14" of the region B is equal to the total value "14" of the region B held by the distance information holding unit 125, and the total calculated value "20" for the region C is larger than the total value "14" of the region C held by the distance information holding unit 125 (No in S107), the distance information calculation unit 124 holds the minimum value 312 of the total value of the difference held by the distance information holding unit 125 without modification. Thus, the clock value 311 and the minimum value 312 of the total value of the difference shown in FIG. 14C is held by the distance information holding unit 125. Note that when the total value 304 calculated by the distance information calculation unit 124 is equal to the minimum value 312 of the total value held by the distance information holding unit 125, the clock value 311 held by the distance information holding unit 125 may be updated.

The distance information calculation unit 124 shifts the left-hand image to the left by one pixel (S104) as shown in FIG. 12D since the number of shift times is "2" and the predetermined number of shifts (4) have not been performed (No in S109). The distance information calculation unit 124 calculates an absolute value of the difference for the right-hand image and the shifted left-hand image (S105). The distance information calculation unit 124 calculates the total value 304 of the absolute value 303 of the difference for each region A, B and C (S106). For example, as shown in FIG. 13D, "8", "0" and "0" are calculated as total values 304 of each region A, B and C.

Next, the distance information calculation unit 124 compares the minimum value 312 (FIG. 14C) of the total value for each region A, B and C held by the distance information holding unit 125, and the calculated total value 304. Since the calculated total value "8" of the region A is greater than the total value "0" of the region A held by the distance information holding unit 125 (No in S107), the distance information calculation unit 124 holds the clock value 311 of the region A and the minimum value 312 of the total value of the difference held by the distance information holding unit 125 without modification. Furthermore, since the calculated total values "0" and "0" for the regions B and C are smaller than the total values "14" and "14" of the regions B and C held by the distance information holding unit 125 (Yes in S107), the distance information calculation unit 124 updates the clock value 311 of the regions B and C held by the distance information holding unit 125 to the present clock value (number of shifts) "3" and updates the minimum value 312 of the total value for the difference to the calculated value "0". Thus, the clock value 311 and the minimum value 312 of the total value for the difference shown in FIG. 14D are held by the distance information holding unit 125.

The distance information calculation unit 124 shifts the left-hand image to the left by one pixel (S104) as shown in FIG. 12E since the number of shift times is "3" and the predetermined number of shifts (4) have not been performed (No in S109). The distance information calculation unit 124 calculates the absolute value of the difference between the right-hand image and the shifted left-hand image (S105). The distance information calculation unit 124 calculates the total value 304 of the absolute value 303 of the difference for each region A, B and C (S106). For example, as shown in FIG. 13E, "13", "20" and "10" are calculated as total values 304 for each region A, B and C.

Next, the distance information calculation unit 124 compares the total value for each region A, B and C (FIG. 14D) held by the distance information holding unit 125 with the calculated total value 304. Since the total values "13", "20" and "10" calculated for each of the regions are larger than the total values "0", "0" and "0" of each region held by the distance information holding unit 125 (No in S107), the distance information calculation unit 124 holds the clock value 311 and the minimum value 312 of the total value for the difference held by the distance information holding unit 125 without modifying them. Thus, the clock value 311 and the minimum value 312 of the total value of the difference shown in FIG. 14E are held by the distance information holding unit 125.

Since the number of shifts is "4" and the predetermined number of shifts (4) has been performed (Yes in S109), the distance information holding unit 125 outputs the held clock value 311 as the parallax.

Next, the signal processing unit 120 reads out the 3rd and 4th rows of the video signal in the right-hand image and the left-hand image and performs the same parallax calculation process on the read-out video signal. Further, the signal processing unit 120 reads out the 5th through the 24th row of the video signal in the right-hand image and the left-hand image and performs the same parallax calculation process on the read-out video signal.

By performing the processes above, the signal processing unit 120 calculates the parallax for each pixel of 2 rows x 4 column from the right-hand image and the left-hand image and outputs the parallax.

From the above, in the solid-state imaging device 100 according to the first embodiment of the present invention, the imaging unit 110 and the signal processing unit 120 which outputs information related to the distance to the object from the first video signal and the second video signal, which are captured by the imaging unit 110, are formed on the same semiconductor substrate. Thus, the wiring between the imaging unit 110 and the signal processing unit 120 can be shortened. Thus, noise resistance can be improved. Furthermore, the transmission rate of the video signal outputted by the imaging unit 110 (the right-hand image and the left-hand image) can be improved. Further, variation between the right-hand image and the left-hand image can be reduced by capturing the right-hand image and the left-hand image with a single imaging unit 110. Thus, the signal processing unit 120 can calculate information related to the distance to the object with high accuracy and efficiency. Furthermore, the video signal (right-hand image and left-hand image) and information related to distance to the object (parallax) can be outputted to the outside.

Note that the signal processing unit 120 may output the video signal 121 and the distance information 122 in parallel and may output to a serial from a common terminal. Further, the signal processing unit 120 outputs the video signal 121 and the distance information (parallax) 122 separately, however the signal processing unit 120 may be output information about the parallax attached to the left-hand image or the right-hand image. Further, the left-hand image and the right-hand image may be combined and outputted. Further, the signal processing unit 120 calculates the distance to the object 160 from the solid-state imaging device 100 using the calculated parallax, and the distance may be outputted as the distance information 122.

Furthermore, in the above explanations, the case is explained for which the photoelectric elements 111 are arranged in 24 rows by 24 columns, however the number of photoelectric conversion elements 111 (number of pixels) is not limited to this.

Furthermore, in the above explanations, an example is described in which the parallax is calculated for each 2 rows by 4 columns of pixels, however the range of pixels with which the parallax is calculated is not limited to this.

Furthermore, although in the above explanations, the absolute value of the difference in signal level for each pixel of the left-hand image and the right-hand image is calculated in Step S101 and S105 and the total value of the difference between each pixel is calculated in Step 102 and S106, these calculations may be replaced with the processes below. The signal level of pixels in the left-hand image is added to each region A, B and C, thereby replacing the signal level 301 described above. The signal level of pixels in each region A, B and C, is added in the same way to the right-hand image, thereby replacing the signal level 302 described above. For each region A, B and C, the absolute value of the difference is calculated, replacing the total value 304 described above and subsequently the same process may be performed. Thus, when an imaging element with miniature detailed pixels is used, the calculation process amount can be reduced while maintaining the accuracy of the fixed distance information.

Furthermore, in the above explanations, the process is performed by shifting the pixels one pixel at a time, however the pixels may be shifted by shifting multiple pixels at a time.

Here, as shown in FIG. 8B, when a vertical divergence occurs between the left-side image 171b and the right-side image 172b (i.e. the epipolarity is poor), the accuracy of the calculation process for the parallax d in the distance information calculation unit 124 drops since the image does not match when each of the lines are compared due to the vertical divergence. Furthermore, when the left-hand image and the right-hand image diverge horizontally, the accuracy of the parallax d drops by the number of pixels in the divergence. The solid-state imaging device 100 according to the first embodiment of the present invention can reduce horizontal and vertical divergence between the right-side image and the left-side image by capturing the right-hand image and the left-hand image with a single CMOS image sensor as described above. In this way, the calculation efficiency for the parallax d can be improved. Furthermore, since the photoelectric convertability of the right-hand image and the left-hand image is the same, the parallax d can be calculated easily and with high accuracy along with obtaining a high epipolarity in an imaging plane.

Furthermore, in the explanations above, the first imaging region 115 and the second imaging region 116 are configured in the photoelectric conversion elements 111 as shown in FIG. 3 such that they are divided into right and left (horizontally), however the first imaging region 115 and the second imaging region 116 may be arranged such that they are divided into upper and lower (vertically). Furthermore, in the explanation above, the filter 152 is formed at the top of the lens 150 and the filter 153 is formed at the top of the lens 151, however, the filter 152 may be formed on the bottom of the lens 150 and the filter 153 may be formed on the bottom of the lens 151.

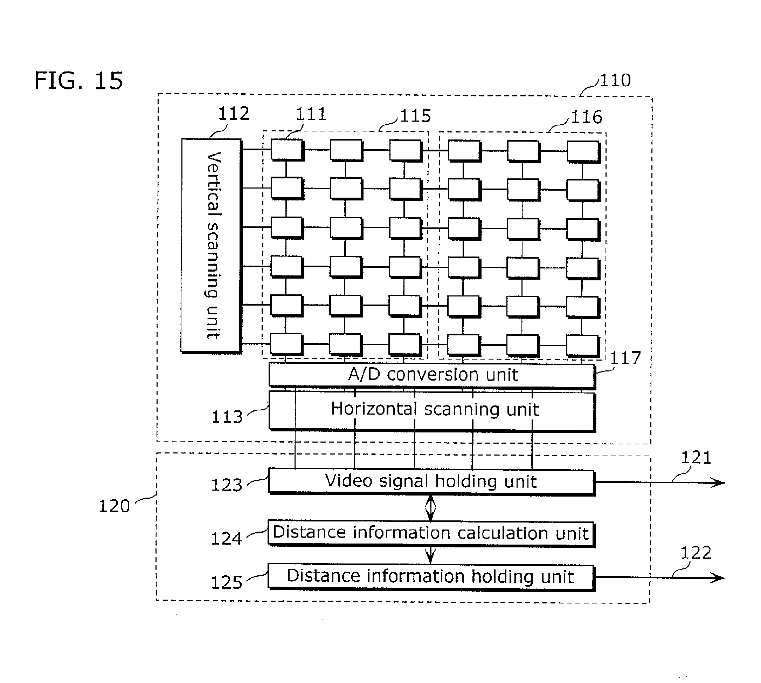

Furthermore, in the above explanation, the structure shown in FIG. 3 is explained with the structures of the imaging unit 110 and the signal processing unit 120, however the structure shown in FIG. 15 may also be used. FIG. 15 is a diagram which shows a modified structure of the imaging unit 110 and the signal processing unit 120 of the solid-state imaging device according to the first embodiment of the present invention. For example, as shown in FIG. 15, the imaging unit 110 may include an A/D conversion unit 117 which converts signal charge photoelectrically converted by each column of photoelectric conversion elements 111 arranged in a matrix shape into respective digital signals. In other words, the A/D conversion unit 117 has a function of A/D converting signal charge that has been photoelectrically converted by the photoelectric conversion elements 111 arranged in each row. By including the A/D conversion unit 117 which converts the signal charge in each column into a digital signal, the A/D conversion can be quickly performed. Thus, read-out processing from the imaging unit 110 can be performed quickly. Additionally, since the signal charge of each row can be read out simultaneously, the parallax calculation process can be performed efficiently on a row basis in the signal processing unit 120.

Furthermore, in the explanation above, the filter 154 only allows light of the first frequency band to pass through, however the frequency band included in the first frequency band may be allowed to pass through. In other words, the filter 152 allows only light in the first frequency band (for example, wavelength 750nm to 850nm) to pass, and the first filter 154 allows only light in a frequency band included in the first frequency band (for example, wavelength 770nm to 830nm) to pass. Further, the filter 154 may allow a frequency band, which is not included in the first frequency band and which is a frequency band with a low transmittance rate, to pass. For example, when the filter 154 , the filter 154 may include a wideband frequency characteristic (for example, wavelength 700nm to 900nm), have a transmittance rate of no more than 30%, including a band which is not included in the first frequency band (for example, wavelength 750nm to 850nm).

In the same way, the filter 155 may allow only the frequency band included in the second frequency band to pass through. Further, the filter 155 may allow a frequency band, which is not included in the second frequency band and which is a frequency band with a low transmittance rate, to pass through.

Furthermore, in the explanation above, the first frequency band and the second frequency band are different frequency bands which do not mutually overlap, however a part of the first frequency band and a part of the second frequency band may overlap. For example, a part of the frequency band that the filter 153 allows to pass may include a band which the filter 152 allows to pass with a transmittance rate of no more than 50%.

Furthermore, in the above explanation, the signal processing unit 120 outputs the right-hand image and the left-hand image captured by the imaging unit 110, however a part of the right-hand image and the left-hand image may be replaced and outputted based on the calculated parallax. For example, the signal processing unit 120 may compare the parallax held by the distance information holding unit 125 with a predetermined range, and when the parallax is not included in the predetermined range, the right-hand image and the left-hand image corresponding to the parallax may replace a predetermined image (a predetermined pixel signal or fixed value (black or white, and so on)) and the right-hand image and the left-hand image may be outputted. Thus, by replacing the corresponding image with black fill and the like when the value of the parallax is outside of the predetermined range (for example, when the object is far), an image in which only a target (the object) within the predetermined range is displayed can be outputted.

(Second Embodiment)

The solid-state imaging device 100 according to the first embodiment described above controls light introduced into the first imaging regions 115 and the second imaging region 116 by using the filters 152 through 155 which allow light of different wavelengths to pass. However, since the wavelengths of light introduced into the first imaging region 115 and the second imaging region 116 differ, a difference in the image of the outputted video signal is generated.

The solid-state imaging device according to the second embodiment of the present invention further includes an imaging region for performing correction in addition to the two imaging regions. With this, the difference between the images outputted by the two imaging regions can be reduced by correcting the captured video signal.

Below, the structure of the solid-state imaging device according to the second embodiment of the present invention is described.

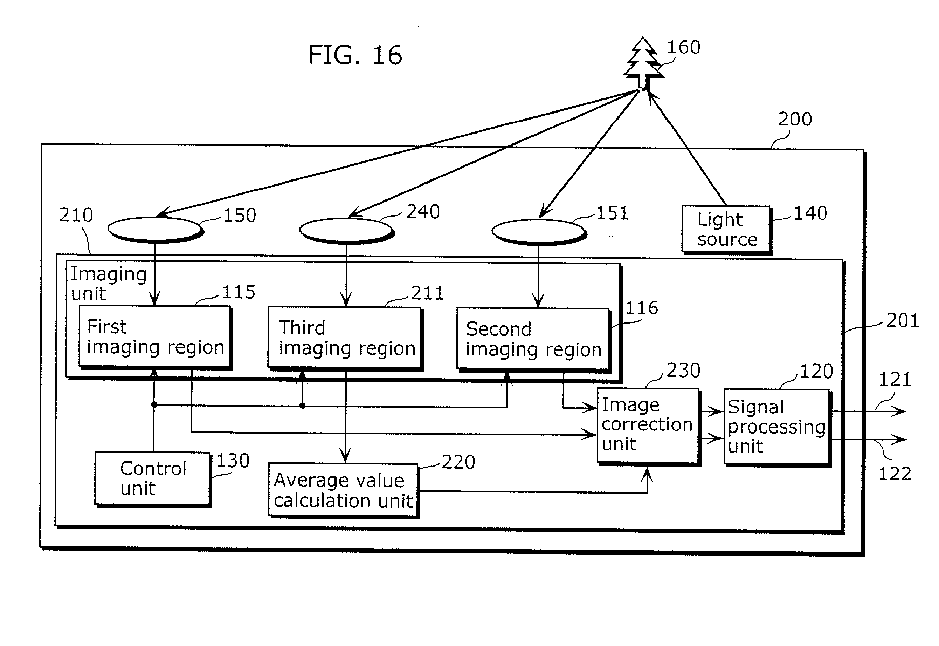

FIG. 16 is a diagram which shows a structure of the solid-state imaging device according to the second embodiment of the present invention. Note that the same numbers are attached to the elements as in FIG. 2 and thus a detailed description is not repeated.

The solid-state imaging device 200 shown in FIG. 16 differs from the solid-state imaging device 100 according to the first embodiment shown in FIG. 2 in the structure of the semiconductor device 201, and in including the lens 240. The semiconductor device 201 further includes an average value calculation unit 220 and an image correction unit 230 for the semiconductor device 101. In the semiconductor device 201, the structure of the imaging unit 210 differs compared to the semiconductor device 101.

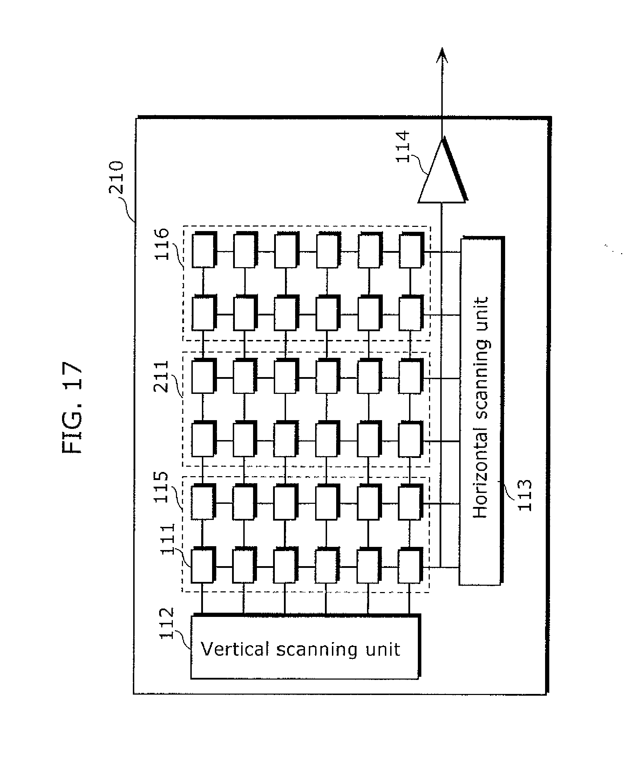

FIG. 17 is a diagram which shows the structure of the imaging unit 210. The imaging unit 210 includes the photoelectric conversion elements 111, the vertical scanning unit 112, the horizontal scanning unit 113 and the A/D conversion unit 114. Note that the same numbers are attached to the elements as in FIG. 3, and a detailed description is not repeated.

The photoelectric conversion elements 111 include the first imaging region 115, the second imaging region 116, or a third imaging region 211. For example, there are the same amount of photoelectric conversion elements 111 included in the first imaging region 115, the second imaging region 116 and the third imaging region 211. The photoelectric conversion elements 111 included in the first imaging region 115 photoelectrically convert light collected by the lens 150. The photoelectric conversion elements 111 included in the second imaging region 116 photoelectrically convert light collected in the lens 151. The photoelectric conversion elements 111 included in the third imaging region 211 photoelectrically convert light collected by the lens 240. Note that the photoelectric conversion elements 111 are arranged in 6 rows by 6 columns in FIG. 17, however the amount of photoelectric conversion elements 111 is not limited to this.

The lens 240 collects reflected light from the object 160 in the third imaging region 211.

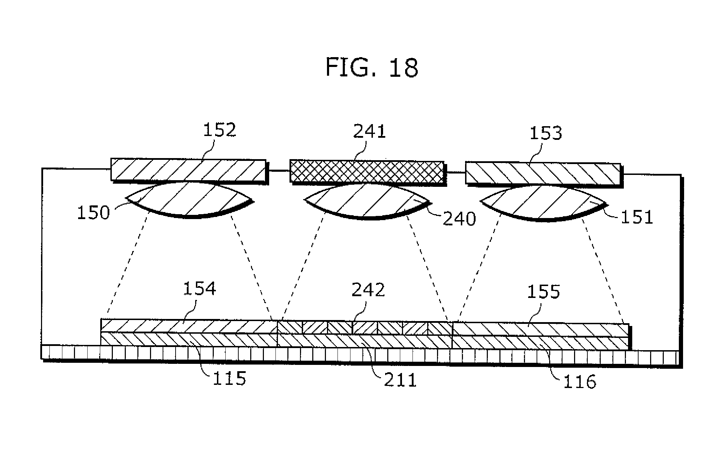

FIG. 18 is a diagram which typically shows a cross-section structure of the first imaging region 115, the second imaging region 116 and the third imaging region 211. Note that the structures of the first imaging region 115, the second imaging region 116, the lens 150 and 151 and the filters 152 through 155 are the same structures as the first embodiment shown in FIG. 4 and thus a detailed explanation is not repeated. As shown in FIG. 18, the solid-state imaging device 200 further includes a filter 241 and 242. Furthermore, the third imaging region 211 is layed out between the first imaging region 115 and the second imaging region 116.

The filters 241 and 242 are multi-layered film interference filters, for example, the configurations shown in FIG. 5A and FIG. 5B in the same way as the first embodiment described above. Reflected light from the object 160 is introduced into the third imaging region 211 via a optical incidence path made up of the filter 241, the lens 240 and the filter 242. The filter 241 is formed on the upper side of the lens 240. The filter 241 allows light of a third frequency band (for example, 750nm to 1050nm) which includes the first frequency band (for example, wavelength 750nm to 850nm) that the filters 152 and 154 allow to pass and the second frequency band which the filters 153 and 155 allow to pass (for example, wavelength 950nm to 1050nm). In other words, light of the third frequency band is collected in the third imaging region 211 by the filter 241 and the lens 240. The filter 242 is formed on the third imaging region 211.

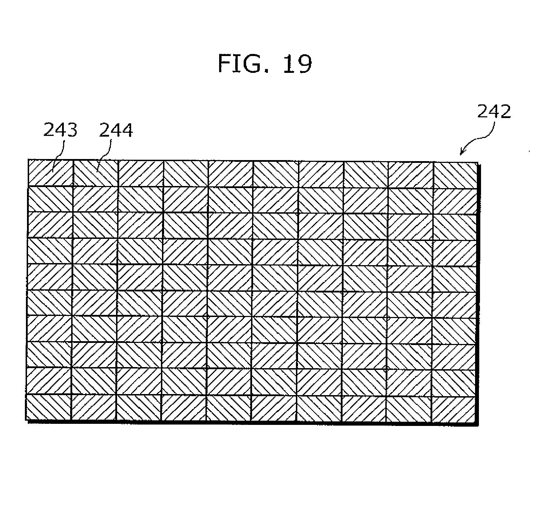

FIG. 19 is a diagram which typically shows the structure of the filter 242 seen from above. The filter 242 as shown in FIG. 19 includes a filter 243 which allows light of the first frequency band to pass and a filter 244 which allows light of the second frequency band to pass. The filters 243 and 244 are for example arranged in a lattice shape. Note that the layout of the filters 243 and 244 is not limited to a lattice shape, for example the rows or the columns may be a stripe shape, and the region in which the photoelectric conversion elements 111 are laid out may be configured so as to be split in two (for example, the filter 243 may be configured on the right half and the filter 244 on the left half of FIG. 19). Furthermore, each filter 243 and 244 correspond to each of the photoelectric conversion elements 111 in the third imaging region 211, and are formed on respective photoelectric conversion elements 111.

The average value calculation unit 220 calculates the average value of the signal for each pixel outputted by the third imaging region 211. More specifically, the average value calculation unit 220 calculates an average value y1 which is photoelectrically converted by the photoelectric conversion element 111 corresponding to the filter 243, and calculates an average value y2 of the signal photoelectrically converted by the photoelectric conversion element 111 corresponding to the filter 244.

The image correction unit 230 corrects a signal in each pixel of the video signal outputted by the first imaging region 115 and the second imaging region 116 based on the average value y1 and y2 calculated by the average value calculation unit 220. More specifically, the image correction unit 230 calculates a signal Y11 for each pixel after correction by performing the calculation shown below (Formula 1) for the signal Y1 at each pixel in the video signal outputted by the first imaging region 115.

$$Y11 = Y1 \times (y2/y1) \dots \text{(Formula 1)}$$

Otherwise, the image correction unit 230 calculates a signal Y22 for each pixel after correction by performing the calculation shown below (Formula 2) for the signal Y2 in each pixel in the video signal outputted by the second imaging region 116.

$$Y22 = Y2 \times (y1/y2) \dots \text{(Formula 2)}$$

Next, the operations of the solid-state imaging device 200 are described.

Near-infrared light projected from the light source 140 is reflected by the object 160. In the light reflected by the object 160, the filter 152 allows only light of the first frequency band to pass, the light is collected in the lens 150 and projected into the first imaging region 115 through the filter 154. Furthermore, of the light reflected by the object 160, the filter 153 allows only light of the second frequency to pass, the light is collected in the lens 151 and projected into the second imaging region 116 through the filter 155. Furthermore, in the light reflected by the object 160, the filter 241 allows only light of the third frequency, which includes light of the first frequency and the second frequency, to pass; the light is collected in the lens 240 and projected into the third imaging region 211 through the filter 242.

The first imaging region 115 photoelectrically converts light of the first frequency band and outputs the video signal Y1. The second imaging region 116 photoelectrically converts light of the second frequency band and outputs the video signal Y2. The photoelectric conversion elements 111 formed on the underside of the filter 243 in the third imaging region 211 photoelectrically converts light of the first frequency band and outputs a signal. The photoelectric conversion elements 111 formed on the underside of the filter 244 in the third imaging region 211 photoelectrically convert light of the second frequency band and output a signal.

The average value calculation unit 220 calculates an average value y1 of the signal from the photoelectric conversion element 111 which corresponds to the filter 243, the signal being outputted by the third imaging region 211, and an average value y2 of the signal from the photoelectric conversion element 111 which corresponds to the filter 244.

The image correction unit 230 performs correction on the video signal Y1 outputted by the imaging region 115 using the average values y1 and y2 calculated by the average value calculation unit 220 according to the above (Formula 1), and outputs the corrected video signal Y11. Note that the image correction unit 230 may correct the video signal Y2 outputted by the second imaging region 116 using the average value y1 and y2 calculated by the average value calculation unit 220 according to the above (Formula 2) without performing correction using the above (Formula 1), and may output the corrected video signal Y22.

The signal processing unit 120 takes the corrected video signal Y11. as the left-hand image and the video signal Y2 outputted by the second imaging region 116 as the right-hand image, and calculates the parallax d between the left-hand image and the right-hand image. Note that the signal processing unit 120 takes the corrected video signal Y1 outputted by the first imaging region 115 as the left-hand image and the corrected video signal Y22 as the right-hand image, and calculates the parallax d between the left-hand image and the right-hand image. Furthermore, calculating the parallax d in the signal processing unit 120 is performed in the same way as the first embodiment and thus the explanation is not repeated. The signal processing unit 120 outputs information about the parallax d calculated for the left-hand image and the right-hand image to the outside.

From the above, the solid-state imaging device 200 according to the second embodiment of the present invention corrects the video signal captured by the first imaging region 115 and the second imaging region 116 using the average value y1 of the signal corresponding to light of the first frequency band photoelectrically converted by the third imaging region 211, and the average value y2 of the signal corresponding to light of the second frequency band. Thus, the difference between signal levels in the video signal outputted by the first imaging region 115 and the second imaging region 116, which occurs due to the difference of light frequency bands introduced into the first imaging region 115 and the second imaging region 116, can be reduced.

Note that in the above explanation, although the third imaging region 211 is formed between the first imaging region 115 and the second imaging region 116, the position at which the third imaging region 211 is formed is not limited to this position. For example, the third imaging region 211 may be formed on the left side of the first imaging region 115 in FIG. 18 and on the right side of the second imaging region 116 in FIG. 18.

Furthermore, in the above explanation, although an example is described in which the first imaging region 115, the second imaging region 116 and the third imaging region 211 are formed as a single CMOS image sensor, the CMOS image sensor may include only the third imaging region 211, and the first imaging region 115 and the second imaging region 116 may be formed as a different CMOS image sensor.

Furthermore, in the above explanation, the solid-state imaging device 200 includes the filter 241, which allows light of the third frequency band that includes the first frequency band and the second frequency band to pass, at the top of the lens 240, however the filter 241 may be formed on the bottom of the lens 240. Further, there is no need to include the filter 241.

Furthermore, in the above explanation, the image correction unit 230 performs the calculation shown in the above (Formula 1) or (Formula 2), however at least one of the calculation of a predetermined constant multiplier and a predetermined value addition may be performed in addition to the calculation shown in the above (Formula 1) or (Formula 2).

Furthermore, in the above explanation, the average value calculation unit 220 calculates the average value y1 of the signal in the photoelectric conversion element 111 which corresponds to the filter 243, the signal being outputted by the third imaging region 211 and the average value y2 for the signal of the photoelectric conversion element 111 which corresponds to the filter 244, however the average value calculation unit 220 may calculate the average value y11 of a signal in which the maximum and minimum signals have been eliminated, among the signals of the photoelectric conversion element 111 which corresponds to the filter 243, the signals being outputted by the third imaging region 211, and an average value y22 for a signal in which the maximum and minimum signals have been eliminated, among the signals of the photoelectric conversion element 111 which corresponds to the filter 244. Further, the image correction unit 230 may perform a calculation using the average values y11 and y22 for a signal in which the maximum and minimum signals have been eliminated instead of the average value y1 and y2 in the above (Formula 1) or (Formula 2). Thus, drops in accuracy due to image flaws such as white flaw and black flaw pixels can be reduced.

Furthermore, in the above explanation, although the structure of the third imaging region 211 is the same as the first imaging region 115 and the second imaging region 116, the structure of the third imaging region 211 may differ from the first imaging region 115 and the second imaging region 116. For example, there are a different amount of photoelectric conversion elements 111 included in the third imaging region 211 as the photoelectric conversion elements 111 included in the first imaging region 115 and the second imaging region 116. Furthermore, the photoelectric conversion elements 111 included in the third imaging region 211 may be arranged on a one dimensional shape instead of a two-dimensional shape (matrix shape).

Furthermore, in the explanations of the embodiments above, the present invention was explained for an embodiment applied to a camera which includes a nightvision function using near-infrared light, the camera being installed in a vehicle, however the present invention can also be applied to a camera which outputs distance information to the imaging object instead of a camera which includes a nightvision function using near-infrared light, the camera being installed in a vehicle. For example, the solid-state imaging device according to the present invention can be applied to a camera used by a surveillance device and a camera for a TV phone and so on.

Furthermore, in the above first and second embodiments, the solid-state imaging device includes a light source 140 which projects infrared light, however the light source 140 may project light other than near-infrared light. For example, the light source 140 may project visible light. In this case, the first frequency band and the second frequency band described above may be mutually differing frequency bands which do not overlap within the visible light. Further, when the night-vision function is unnecessary, the solid-state imaging device need not include the light source 140.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

**INDUSTRIAL APPLICABILITY**

The present invention can be applied to a solid-state imaging device, and in particular to a vehicle camera, a surveillance camera, a camera for a TV phone and so on.

**Claims**

**1.** A solid-state imaging device comprising:

an imaging unit which includes photoelectric conversion elements arranged in a matrix in a region having a first imaging region and a second imaging region;

a first light introduction unit operable to guide and introduce light into said first imaging region;

a second light introduction unit provided apart from said first light introduction unit and operable to guide and introduce light into said second imaging region;

an output unit operable to:

convert signal charge, which the photoelectric conversion elements arranged in said first imaging region have photoelectrically converted, into voltage or current and output the converted voltage or current as a first video signal; and

convert signal charge, which the photoelectric conversion elements arranged in said second imaging region have photoelectrically converted, into voltage or current, and output the converted voltage or current as a second video signal; and

a calculation unit operable to calculate information related to distance to an object using the first video signal and the second video signal outputted by said output unit;

wherein said imaging unit, said output unit and said calculation unit are formed on the same semiconductor substrate, and

wherein said first light introduction unit includes:

a first collection unit operable to collect light of a first frequency band in said first imaging region;

a first filter formed on said first imaging region, which allows light of a third frequency band that is included in the first frequency band to pass;

a second collection unit operable to collect light of a second frequency band, which differs from the first frequency band, in said second imaging region; and

a second filter formed on said second imaging region, which allows light of a fourth frequency band, which is included in the second frequency band, to pass.

2. The solid-state imaging device according to Claim 1, further comprising:

a third imaging region which includes photoelectric conversion elements arranged in a matrix;

a third light introduction unit operable to guide and introduce light to said third imaging region;

wherein said third light introduction unit includes:

a third collection unit operable to collect light of a fifth frequency band, which includes the first frequency band and the second frequency band, in said third imaging region;

a third filter formed on the third imaging region, and

said third filter includes:

a fourth filter formed on first photoelectric conversion elements, which blocks light of the second frequency band and allows light of the third frequency band to pass, the first photoelectric conversion elements being included in photoelectric conversion elements included in said third imaging region; and

a fifth filter formed on second photoelectric conversion elements, which blocks light of the first frequency band and allows light of the fourth frequency band to pass, the second photoelectric conversion elements being included in photoelectric conversion elements included in said third imaging region.

3. The solid-state imaging device according to Claim 2, further comprising:

an average value calculation unit operable to calculate a first average value which is an average value of the signals photoelectrically converted by the first photoelectric conversion elements and a second average value which is an average value of the signals photoelectrically converted by the second photoelectric conversion elements; and

a correction unit operable to correct the first video signal and the second video signal based on a ratio of the first average value and the second average value calculated by said average value calculation unit.

4. The solid-state imaging device according to Claim 1,
wherein said first filter and said second filter respectively include:

a first dielectric layer;
a second dielectric layer; and
an insulator layer which is formed between said first dielectric layer and said second dielectric layer; and

wherein an optical film thickness of said insulator layer differs from an optical film thickness of said first dielectric layer and said second dielectric layer.

**5.** The solid-state imaging device according to Claim 1, further comprising:

a light source which projects a light onto an object with light of a frequency band that includes the first frequency band and the second frequency band.

**6.** The solid-state imaging device according to Claim 1,
wherein the first frequency band and the second frequency band are included in a near-infrared region.

**7.** The solid-state imaging device according to Claim 1 or 2,
wherein said calculation unit includes:

a first holding unit operable to hold the first video signal and the second video signal outputted by said output unit;
a difference calculation unit operable to calculate a parallax for the object using the first video signal and the second video signal held by said first holding unit; and
a second holding unit operable to hold the parallax calculated by said difference calculation unit, and

wherein said difference calculation unit includes:

a shift unit operable to repeat a process of horizontally shifting m (any integer not less than 1) rows of pixels in the first video signal held by said first holding unit by a predetermined amount of pixels for a predetermined number of times;
a difference calculation unit operable to calculate an absolute value of the difference in signal level for each pixel included in a video signal in shifted m rows of pixels by said shift unit, and for the m rows of the second video signal held by said first holding unit, every time the process is performed by said shift unit the predetermined number of times;
an addition unit operable to calculate a sum of n (any integer not less than 1) columns of absolute values of the difference calculated by said difference calculation unit every time the process is performed by said shift unit the predetermined number of times;
a control unit operable to hold in said second holding unit the sum calculated by said addition unit and the number of shifts executed by said shift unit when the sum calculated by said addition unit is smaller than the sum held by said second holding unit, every time the process is performed by said shift unit the predetermined number of times; and
said second holding unit is operable to output the held number of times the process is performed as the parallax after the predetermined number of processes have been completed by said shift unit.

**8.** The solid-state imaging device according to Claim 7,
wherein said difference calculation unit is operable to calculate the parallax for each m1 (any integer not less than 1) rows x n1 (any integer not less than 1) columns inputted from outside,
said shift unit is operable to repeat the process of shifting pixels in m1 rows of the first video signal held by said first holding unit by a predetermined number of pixels, the predetermined number of times,
said difference calculation unit is operable to calculate an absolute value of the difference in signal level for each pixel included in a video signal which said shift unit has shifted by m1 rows of pixels, and for the m1 rows of the second video signal held by said first holding unit, every time the process is performed by said shift unit the predetermined number of times, and
said addition unit is operable to calculate a sum of n1 columns of absolute values of the difference calculated by said difference calculation unit, each time a process is performed by said shift unit the predetermined number of times.

# FIG. 1

## FIG. 2

160

100

150   151   Light source   140

110

Imaging unit   101

First imaging region   Second imaging region

115   116   120   121

Signal processing unit

Control unit   130   122

EP 2 026 591 A2

FIG. 3

EP 2 026 591 A2

FIG. 4

FIG. 5A

FIG. 5B

152(153,154,155)

152(153,154,155)

161

162

163

164

165

166

167

168

164

165

## FIG. 6

EP 2 026 591 A2

FIG. 7

EP 2 026 591 A2

FIG. 8A

171a

172a

160

160

FIG. 8B

171b

172b

160

173

160

FIG. 9

FIG. 10

EP 2 026 591 A2

# FIG. 11

Start

Calculate difference S101

Calculate total difference S102

Hold total S103

Shift S104

Calculate difference S105

Calculate total difference S106

S107
Calculated total
< Held difference — No

Yes

Update Calculated
total and clock value S108

S109
Finish shift
function of predetermined
number of times — No

Yes

Output held clock
value as parallax S110

Finish



EP 2 026 591 A2

**FIG. 12A**

Left-hand image 1st row
Left-hand image 2nd row

Right-hand image 1st row
Right-hand image 2nd row

**FIG. 12B**

Left-hand image 1st row
Left-hand image 2nd row

Right-hand image 1st row
Right-hand image 2nd row

**FIG. 12C**

Left-hand image 1st row
Left-hand image 2nd row

Right-hand image 1st row
Right-hand image 2nd row

**FIG. 12D**

Left-hand image 1st row
Left-hand image 2nd row

Right-hand image 1st row
Right-hand image 2nd row

**FIG. 12E**

Left-hand image 1st row
Left-hand image 2nd row

Right-hand image 1st row
Right-hand image 2nd row

30

FIG. 13A

| | | ΣA | | | | | ΣB | | | | ΣC | | |
|---|---|---|---|---|---|---|---|---|---|---|---|---|---|
| | | 1 | 2 | 3 | 4 | 5 | 6 | 7 | 8 | 9 | 10 | 11 | 12 |
| 301 | Left-hand image | | | 2 | | 2 | | 2 | | 3 | | | 5 | |
| 302 | Right-hand image | | | 1 | 2 | | 1 | 2 | | 4 | 3 | | | 5 |
| 303 | Difference | 0 | 0 | 2 | 0 | 2 | 2 | 0 | 0 | 2 | 0 | 0 | 5 |
| | | 0 | 0 | 1 | 2 | 2 | 3 | 2 | 4 | 2 | 0 | 5 | 5 |
| 304 | Total | | | 6 | | | | 14 | | | | 14 | |

FIG. 13B

| | | ΣA | | | | | ΣB | | | | ΣC | | |
|---|---|---|---|---|---|---|---|---|---|---|---|---|---|
| | | 1 | 2 | 3 | 4 | 5 | 6 | 7 | 8 | 9 | 10 | 11 | 12 |
| 301 | Left-hand image | | | 2 | | 2 | | 3 | | 3 | | | 5 | |
| 302 | Right-hand image | | | 1 | 2 | | 4 | 3 | | 4 | 3 | | | 5 |
| 303 | Difference | 0 | 0 | 2 | 0 | 2 | 0 | 3 | 0 | 3 | 0 | 0 | 5 |
| | | 0 | 1 | 1 | 2 | 2 | 4 | 3 | 3 | 3 | 5 | 5 | 0 |
| 304 | Total | | | 8 | | | | 20 | | | | 20 | |

FIG. 13C

| | | ΣA | | | | | ΣB | | | | ΣC | | |
|---|---|---|---|---|---|---|---|---|---|---|---|---|---|
| | | 1 | 2 | 3 | 4 | 5 | 6 | 7 | 8 | 9 | 10 | 11 | 12 |
| 301 | Left-hand image | | | 2 | | 2 | | 3 | | 3 | | | 5 | |
| 302 | Right-hand image | | | 1 | 2 | | 4 | 3 | | 4 | 3 | | | 5 |
| 303 | Difference | 0 | 0 | 0 | 0 | 0 | 0 | 3 | 0 | 3 | 0 | 0 | 0 |
| | | 0 | 0 | 0 | 2 | 2 | 4 | 1 | 3 | 0 | 5 | 5 | 0 |
| 304 | Total | | | 0 | | | | 14 | | | | 20 | |

FIG. 13D

| | | ΣA | | | | | ΣB | | | | ΣC | | |
|---|---|---|---|---|---|---|---|---|---|---|---|---|---|
| | | 1 | 2 | 3 | 4 | 5 | 6 | 7 | 8 | 9 | 10 | 11 | 12 |
| 301 | Left-hand image | | | 2 | | 2 | | 3 | | 3 | | | 5 | |
| 302 | Right-hand image | | | 1 | 2 | | 4 | 3 | | 4 | 3 | | | 5 |
| 303 | Difference | 0 | 0 | 2 | 0 | 0 | 0 | 0 | 0 | 0 | 0 | 0 | 0 |
| | | 1 | 1 | 2 | 0 | 0 | 0 | 0 | 0 | 0 | 0 | 0 | 0 |
| 304 | Total | | | 8 | | | | 0 | | | | 0 | |

FIG. 13E

| | | ΣA | | | | | ΣB | | | | ΣC | | |
|---|---|---|---|---|---|---|---|---|---|---|---|---|---|
| | | 1 | 2 | 3 | 4 | 5 | 6 | 7 | 8 | 9 | 10 | 11 | 12 |
| 301 | Left-hand image | | | 2 | | 3 | | 3 | | 5 | | | 5 | |
| 302 | Right-hand image | | | 1 | 2 | | 4 | 3 | | 4 | 3 | | | 5 |
| 303 | Difference | 2 | 0 | 2 | 0 | 3 | 3 | 0 | 5 | 0 | 5 | 0 | 0 |
| | | 2 | 1 | 2 | 4 | 3 | 1 | 3 | 5 | 5 | 5 | 0 | 0 |
| 304 | Total | | | 13 | | | | 20 | | | | 10 | |

## FIG. 14A

| | ΣA | ΣB | ΣC |
|---|---|---|---|
| Clock | 0 | 0 | 0 |
| Minimum value | 6 | 14 | 14 |

311 → Clock
312 → Minimum value

## FIG. 14B

| | ΣA | ΣB | ΣC |
|---|---|---|---|
| Clock | 0 | 0 | 0 |
| Minimum value | 6 | 14 | 14 |

311 → Clock
312 → Minimum value

## FIG. 14C

| | ΣA | ΣB | ΣC |
|---|---|---|---|
| Clock | 2 | 0 | 0 |
| Minimum value | 0 | 14 | 14 |

311 → Clock
312 → Minimum value

## FIG. 14D

| | ΣA | ΣB | ΣC |
|---|---|---|---|
| Clock | 2 | 3 | 3 |
| Minimum value | 0 | 0 | 0 |

311 → Clock
312 → Minimum value

## FIG. 14E

| | ΣA | ΣB | ΣC |
|---|---|---|---|
| Clock | 2 | 3 | 3 |
| Minimum value | 0 | 0 | 0 |

311 → Clock
312 → Minimum value

FIG. 15

EP 2 026 591 A2

# FIG. 16

EP 2 026 591 A2

FIG. 17

EP 2 026 591 A2

FIG. 18

EP 2 026 591 A2

FIG. 19

**EP 2 026 591 A2**

**Patent documents cited in the description**

- JP 9074572 A
- JP 2006352644 A